(19) Europäisches Patentamt
European Patent Office
Office européen des brevets

(11) EP 4 779 918 A1

(12) **EUROPEAN PATENT APPLICATION**
published in accordance with Art. 153(4) EPC

(43) Date of publication:
**22.07.2026 Bulletin 2026/30**

(21) Application number: **24865899.9**

(22) Date of filing: **13.09.2024**

(51) International Patent Classification (IPC):
*H04L 5/00* (2006.01)

(52) Cooperative Patent Classification (CPC):
**H04L 5/00**

(86) International application number:
**PCT/KR2024/013988**

(87) International publication number:
**WO 2025/058460 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 KR 20230123267**

(71) Applicant: **LG Electronics Inc.**
**Yeongdeungpo-gu**
**Seoul 07336 (KR)**

(72) Inventors:
• **YOU, Hyangsun**
**Seoul 06772 (KR)**
• **KO, Hyunsoo**
**Seoul 06772 (KR)**
• **KIM, Seonwook**
**Seoul 06772 (KR)**

(74) Representative: **Plasseraud IP**
**104 Rue de Richelieu**
**CS92104**
**75080 Paris Cedex 02 (FR)**

(54) **OPERATING METHOD OF DEVICE IN WIRELESS COMMUNICATION SYSTEM, AND DEVICE USING METHOD**

(57)    An operating method of a device in a wireless communication system, and a device are provided. The device determines, in a specific time resource, a first resource block (RB) for transmission of an uplink channel to which frequency hopping is applied, transmits the uplink channel through consecutive RBs in a frequency domain from the first RB, and determines differently the first RB according to whether the specific time resource is a half-duplex resource or a full-duplex resource, wherein, if the specific time resource is the full-duplex resource, the first RB is determined on the basis of a first parameter that indicates the lowest RB from among overlapping RBs between a first frequency resource forming an uplink bandwidth part and a second frequency resource forming an uplink subband, and a second parameter that indicates the size of the overlapping RBs.

FIG. 18

Determining, in a specific time resource, a first resource block (RB) for transmission of an uplink channel to which frequency hopping is applied, wherein the first RB is determined differently depending on whether the specific time resource is an HD (half duplex) resource or an SBFD (subband full duplex) resource, and, when the specific time resource is the SBFD resource, the first RB is determined based on i) a first parameter indicating a lowest resource block among overlapped resource blocks between first frequency resources constituting an uplink BWP(bandwidth part) and second frequency resources constituting an uplink subband, and ii) a second parameter indicating a size of the overlapped resource blocks — S181

Transmitting the uplink channel through contiguous resource blocks in a frequency domain starting from the first RB — S182

## Description

TECHNICAL FIELD

This disclosure relates to a method of operating a device in a wireless communication system and a device using the method.

BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource, which is different from half duplex (HD) operation in which only either downlink reception or uplink transmission can be performed in a specific time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

The former may be called subband-wise full duplex (hereinafter referred to as subband full duplex or SBFD), and the latter may be called spectrum-sharing full duplex (hereinafter referred to as SSFD).

In a time resource operating in SBFD (referred to as an SBFD time resource), a UE may perform transmission of an uplink channel (e.g., a physical uplink shared channel (PUSCH) or a physical uplink control channel (PUCCH)) using resources within an uplink subband.

In a configuration for repetition transmission of the uplink channel, in the related art, frequency resources for the repetition transmission were configured on the premise that only HD time resources exist. In contrast, in a future wireless communication system, each repetition may be performed in an SBFD time resource or an HD time resource (a non-SBFD time resource). In this case, in the SBFD time resource, frequency resources allocated for transmission of the uplink channel may overlap with frequency resources other than the uplink subband.

## DISCLOSURE

### TECHNICAL PROBLEM

The technical problem that the present disclosure aims to solve is to provide a method of operating a device in a wireless communication system and a device that uses the method.

### TECHNICAL SOLUTION

In one aspect, provided is a method of operating a user equipment (UE) in a wireless communication system. The method includes determining, in a specific time resource, a first resource block (RB) for a transmission of an uplink channel to which frequency hopping is applied, and transmitting the uplink channel through resource blocks that are contiguous in a frequency domain from the first RB. Depending on whether the specific time resource is a half duplex (HD) resource or a subband full duplex (SBFD) resource, the first RB is determined differently, and when the specific time resource is the SBFD resource, the first RB is determined based on i) a first parameter indicating a lowest resource block among resource blocks overlapping between a first frequency resource configuring an uplink bandwidth part (BWP) and a second frequency resource configuring an uplink subband, and ii) a second parameter indicating a size of the overlapping resource blocks.

In another aspect, provided are a UE, an apparatus and computer readable medium (CRM) performing the method.

In still another aspect, provided are a method of operating a base station in a wireless communication system, and a base station using the operating method.

A base station receives, in a specific time resource, an uplink channel to which frequency hopping is applied, wherein the uplink channel is received through resource blocks that are contiguous in a frequency domain from a first resource block (RB). Depending on whether the specific time resource is an HD resource or an SBFD resource, the first RB is determined differently, and wherein, when the specific time resource is the SBFD resource, the first RB is determined based on i) a first parameter indicating a lowest resource block among resource blocks overlapping between a first frequency resource configuring a BWP and a second frequency resource configuring an uplink subband, and ii) a second parameter indicating a size of the overlapping resource blocks.

## ADVANTAGEOUS EFFECTS

According to the method according to the present disclosure, even when UL transmission-available resources differ between an SBFD slot and a non-SBFD slot, a PUSCH transmission according to frequency hopping may be performed within the UL transmission-available resources in each slot. Accordingly, PUSCH transmission efficiency is increased and system throughput may be increased.

## BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SBFD or SSFD exist together.
FIG. 14 shows examples of first time resource, second time resource, first frequency resource and second frequency resource.
FIG. 15 shows another example of a first time resource, a second time resource, a first frequency resource, and a second frequency resource.
FIG. 16 illustrates an example of a BWP according to an embodiment of the present disclosure.
FIG. 17 illustrates various inclusion relationships between a UL BWP and a UL subband.
FIG. 18 illustrates a method of operating a UE in a wireless communication system.
FIG. 19 illustrates a signaling procedure between a base station and a UE.
FIG. 20 illustrates a wireless device that can be applied the present specification.
FIG. 21 shows an example of a signal processing module structure.
FIG. 22 shows another example of the structure of a signal processing module in a transmission device.
FIG. 23 shows an example of a wireless communication device according to an implementation example of the present disclosure.
FIG. 24 shows an example of the processor 2000.
FIG. 25 shows an example of the processor 3000.
FIG. 26 shows another example of a wireless device.
FIG. 27 shows another example of a wireless device applied to the present specification.
FIG. 28 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

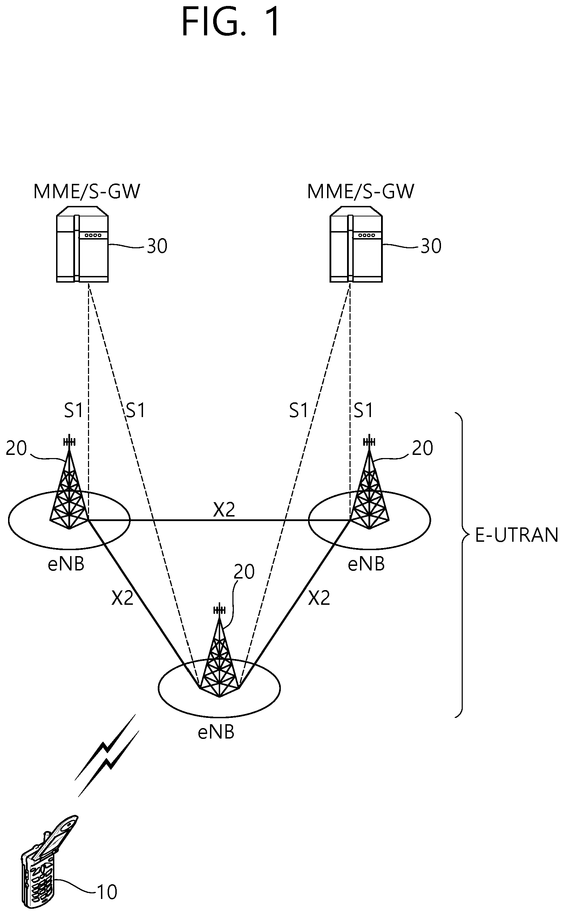

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

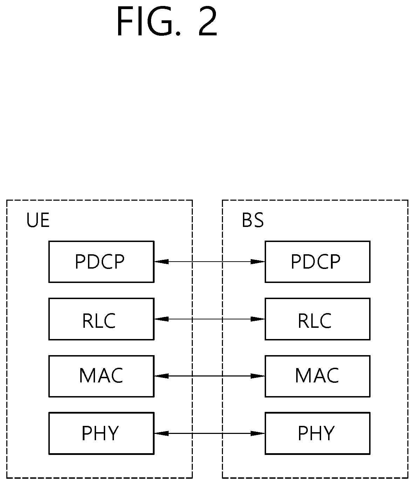

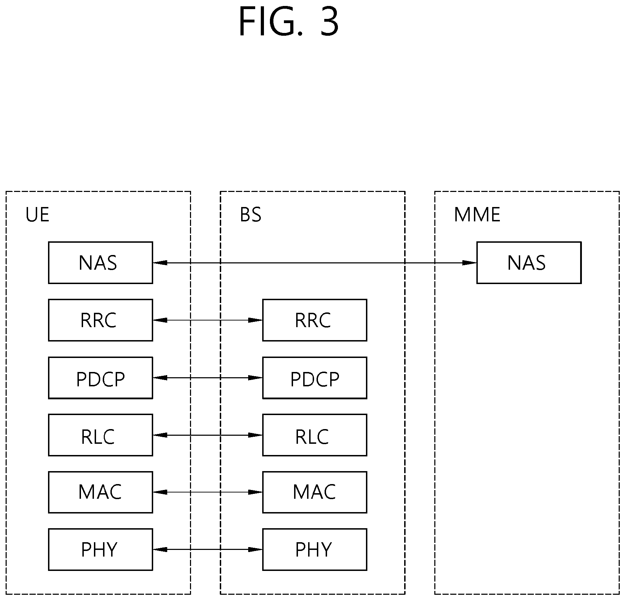

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

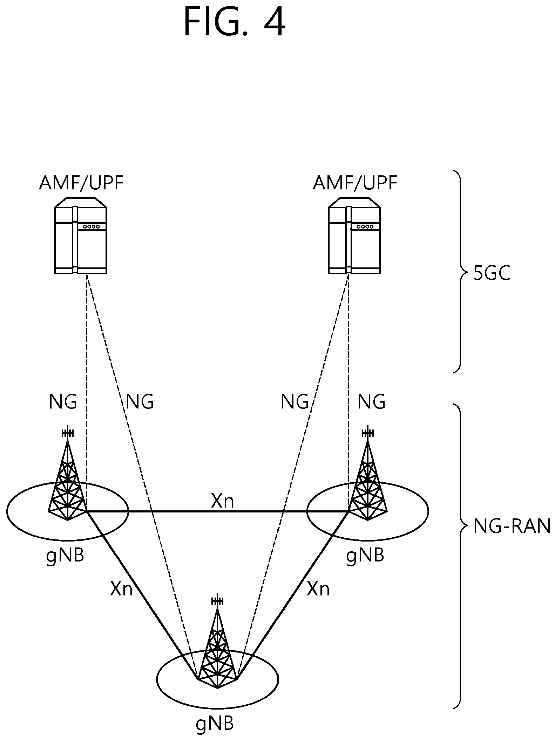

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

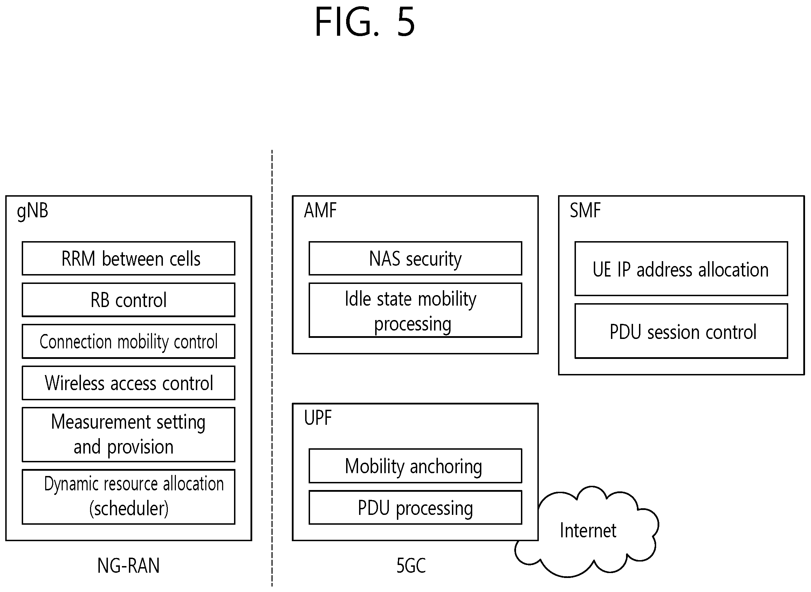

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

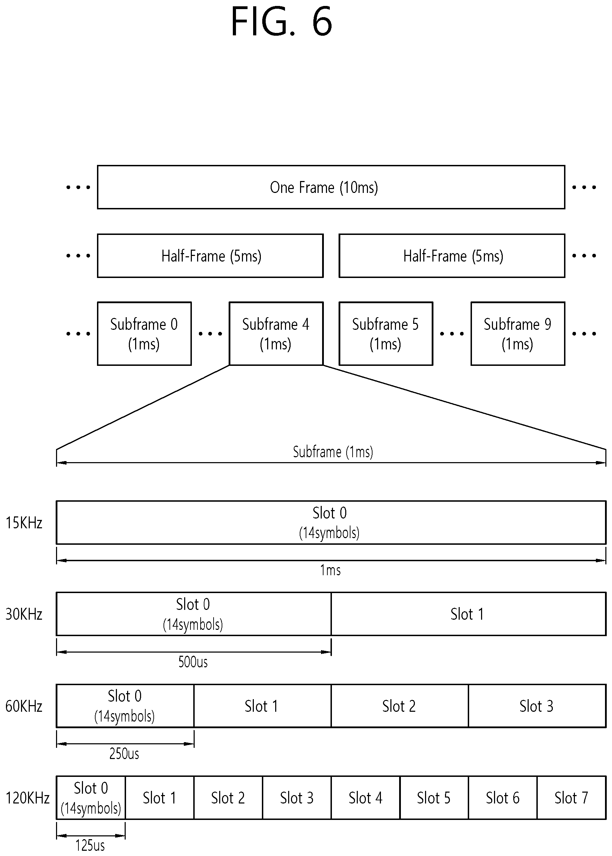

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| μ | $\Delta f = 2^{\mu} \cdot 15$[kHz] | Cyclic prefix (CP) |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations μ.

[Table 2]

| μ | $N^{Slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of μ=0, 1, 2, 3.

Table 2-1 below illustrates that the number of symbols per slot, the number of slots per frame, and the number of slots per subframe vary depending on the SCS, in case of using an extended CP.

[Table 2-1]

| SCS($15*2^{\mu}$) | $N^{Slot}_{symb}$ | $N^{frame,\mu}_{slot}$ | $N^{subframe,\mu}_{slot}$ |
|---|---|---|---|
| 60KHz (μ=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

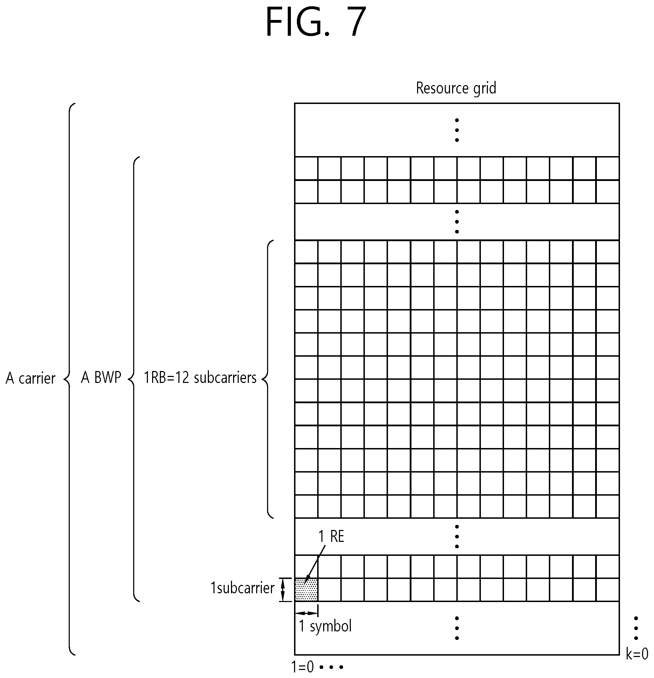

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |

(continued)

| Aggregation level | Number of CCEs |
|---|---|
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

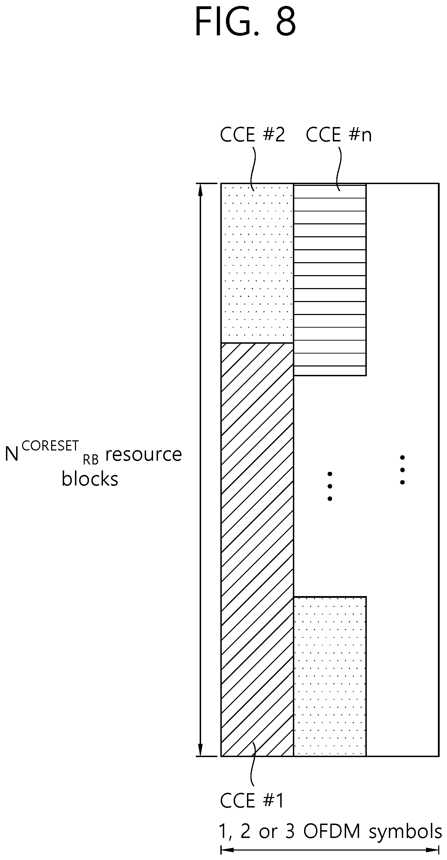

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

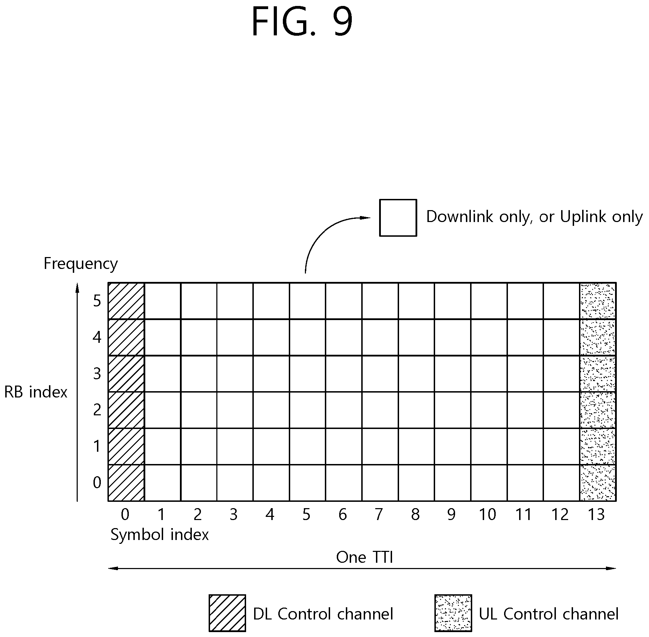

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

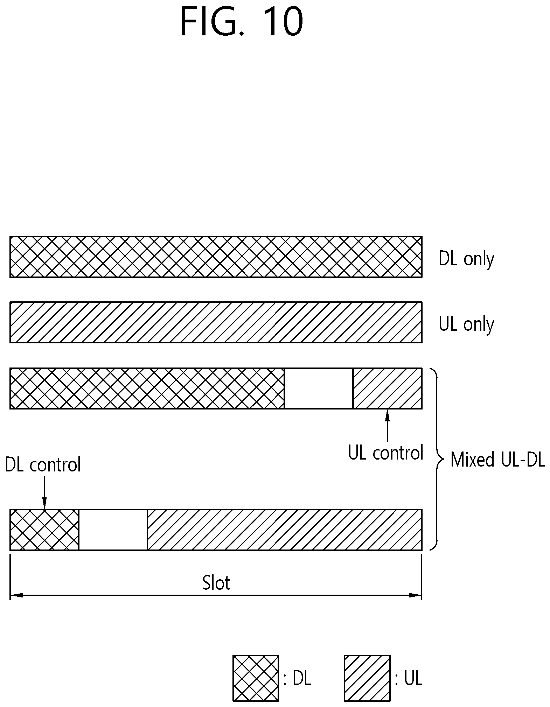

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

    1. DL only configuration,
    2. UL only configuration,
    3. Mixed UL-DL configuration:

        DL region + Guard period (GP) + UL control region,
        DL control region + GP + UL region.
        DL region: (i) DL data region, (ii) DL control region + DL data region.
        UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of $5\times5$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
| --- | --- |
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

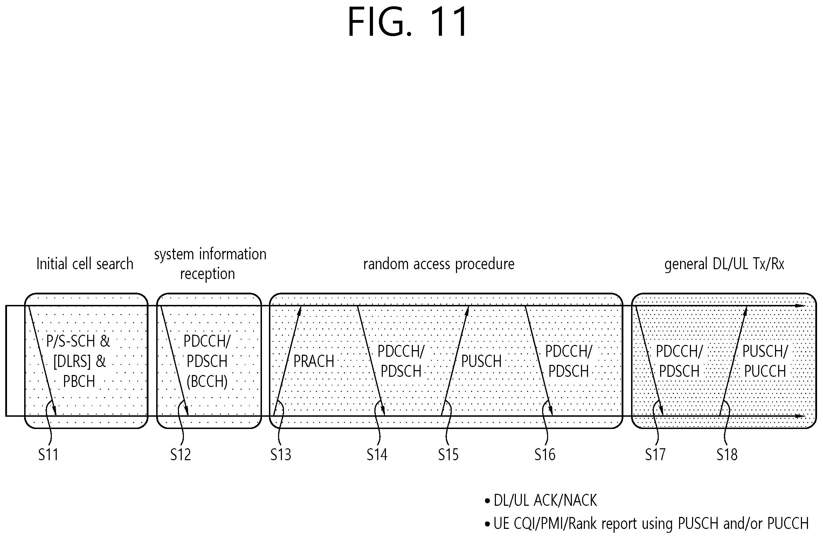

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

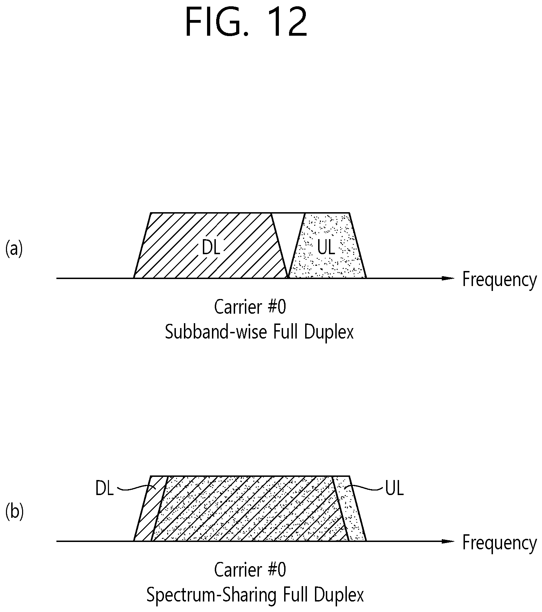

FIG. 12 shows examples of how to apply full duplex within an intra-carrier.

Referring to FIG. 12, the full duplex method includes subband-wise full duplex (hereinafter referred to as subband full duplex or SBFD) as shown in (a) of FIG. 12 and spectrum sharing full duplex (hereinafter referred to as SSFD as shown in (b) of FIG. 12 may be considered.

In the case of SBFD, DL and UL transmission and reception can be performed through different frequency resources in the same time resource within the same carrier (e.g., carrier #0). That is, different frequency resources can be used in the DL and the UL for the same time resource.

In the case of SSFD, DL and UL transmission and reception can be performed through the same frequency resource or overlapped frequency resources in the same time resource within the same carrier (e.g., carrier #0). That is, the same or overlapped frequency resources can be used in the DL and the UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

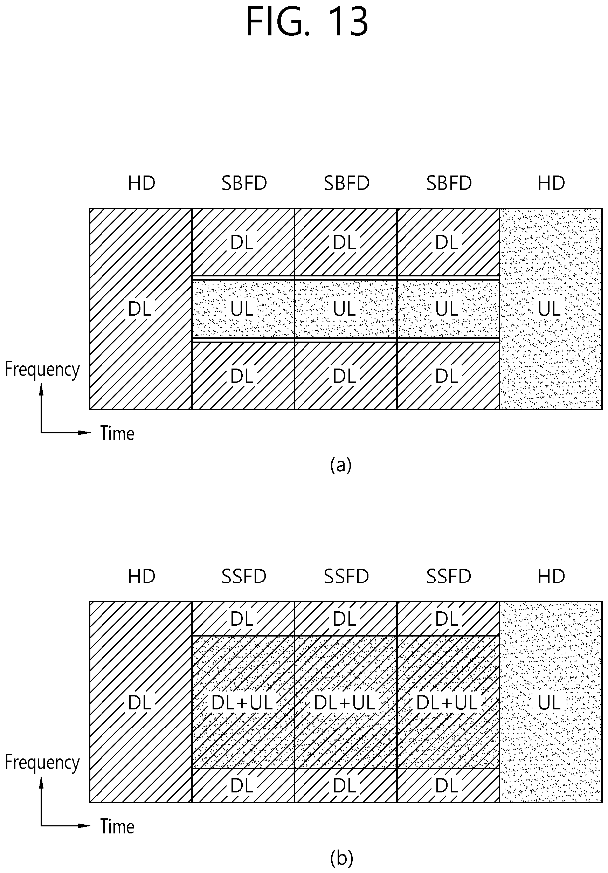

FIG. 13 shows an example in which a time resource operating in half duplex (HD) and a time resource operating in full duplex (FD) such as SBFD or SSFD exist together.

In (a) of FIG. 13, some time resources operating as SBFD are indicated as SBFD, and time resources operating as HD are indicated as HD. In (b) of FIG. 13, some time resources operating as SSFD are indicated as SSFD, and time resources operating as HD are indicated as HD. The unit of time resource may be, for example, a slot or symbol. That is, (a) and (b) of FIG. 13 can be interpreted as examples in which five slots or five symbols exist on the time axis.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SBFD and a slot resource that operate as SSFD are referred to as a SBFD slot and a SSFD slot, respectively. Additionally, the SBFD slot and the SSFD slot can be collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE may perform full duplex operation. That is, both the base station and the UE may simultaneously perform DL and UL transmission and reception using the same or different frequency resources in the same time resource.

Alternatively, only the base station can perform full duplex operation and the UE may perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Meanwhile, in intra-carrier full duplex operation, in a time resource operating in SBFD, a UE may operate by falling back to TDD.

In the following, the term network may be interpreted as base station or CU/DU. The term UE(terminal) may also be interpreted as a mobile terminal (MT) of an IAB node or a MT of a network-controlled repeater (NCR-MT).

<Characteristics of DL/UL time/frequency resources for SBFD and SSFD operation>

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth (or carrier). Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band (or carrier) of the cell, and performs UL operations through all or part of the frequency resources (second frequency resources).

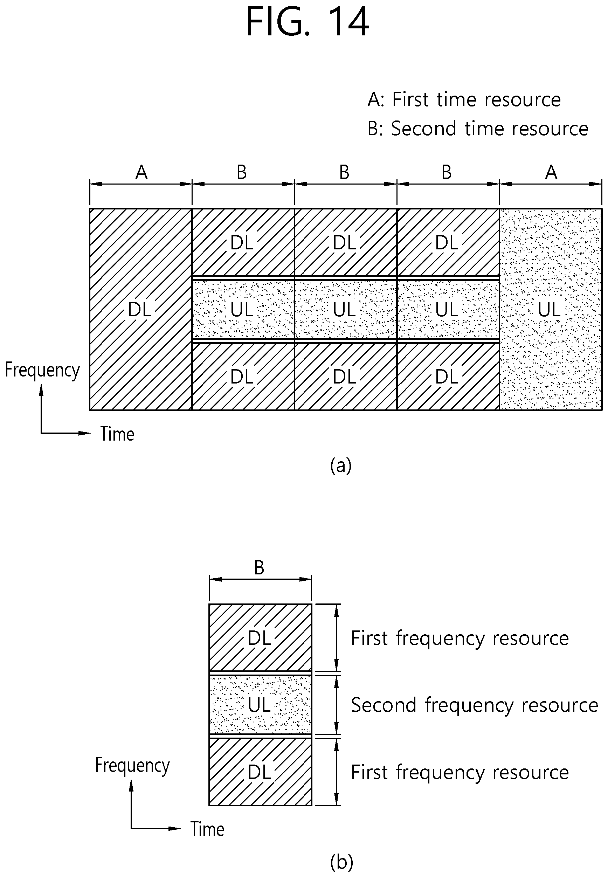

FIG. 14 shows examples of a first time resource, a second time resource, a first frequency resource, and a second frequency resource.

Referring to (a) of FIG. 14, in the first time resource (represented by A), the device operates in HD. In the second time resource (represented by B), for example, the device can operate as SBFD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

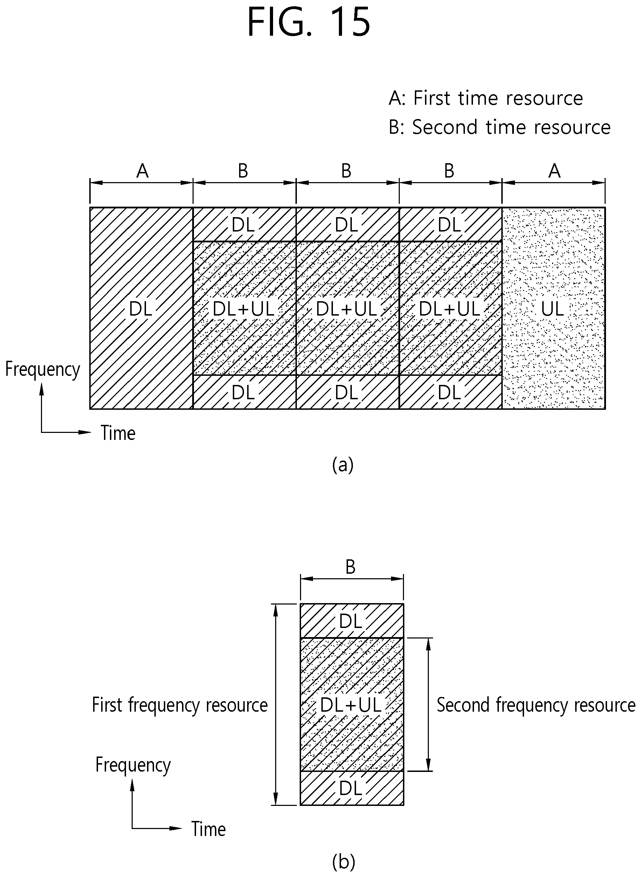

FIG. 15 shows another example of a first time resource, a second time resource, a first frequency resource, and a second frequency resource.

Referring to (a) of FIG. 15, in the first time resource (denoted by A), the device operates as a half-duplex. In the second time resource (labelled B), the device may operate, for example, as an SSFD. In the first time resource, the resource denoted DL corresponds to the first time resource described above, and the resource denoted UL corresponds to the second time resource described above.

Referring to (b) of FIG. 15, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.

1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SBFD operation, the second frequency resource may be composed of contiguous frequency resources, and the first frequency resource may be composed of non-contiguous frequency resources. In this case, the first frequency resource may comprise a plurality of discontiguous sets (e.g., two), each of which may comprise a contiguous frequency resource. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. In this case, the second frequency resource may comprise a plurality of discontiguous sets (e.g., two), each of which may comprise a contiguous frequency resource. This is to reduce interference from DL transmission on UL resources in adjacent carriers by placing the second frequency resource used for DL at the center of the frequency resources constituting the cell.

4) When performing SSFD operation, the second frequency resource may be composed of some frequency resources of the first frequency resource. At this time, the second frequency resource may be configured to have fewer X physical resource blocks (PRBs) on one or both edges of the carrier than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE.

For the FD (SBFD and/or SSFD) operation of the cell, the UE may determine information about the time resources (hereinafter referred to as SBFD symbols) that operate as SBFD (and/or SSFD). For this purpose, information about the SBFD symbol may be set to the UE from the network.

When a specific time resource is set as a time resource operating in SBFD (e.g., an SBFD slot or an SBFD symbol), both DL and UL resources may exist in that time resource. In this case, if there is no UL signal for the base station to receive in that time resource, the base station can only perform DL transmissions. In SBFD resources, DL transmission is only within the DL subband. Therefore, even if there is no UL signal transmitted in the UL subband, DL transmission can only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbols, it can consider a fallback to TDD operation where DL or UL operation is performed over the full band, rather than SBFD operation over DL/UL subbands.

The UE may perform the same TDD operation (half duplex operation) as an existing UE in resources that are not determined to be SBFD symbols. That is, only DL or UL operations can be performed using all frequency resources of the cell.

In the case of a fallback operation, a transition between the SBFD time resource and the non-SBFD time resource may occur more frequently compared to a case where the fallback operation is not performed. Then, due to this, a problem may occur in which operational complexity of a base station and the UE and overhead due to a transition period increase.

In the present disclosure, a time resource operating as SBFD or an SBFD symbol/slot may mean a 'second time resource'. Additionally, in this disclosure, a time resource operating in TDD, a time resource operating in HD, a TDD symbol/slot, or an HD symbol/slot may mean a 'first time resource'.

The DL subband referred to in this disclosure may mean the 'first frequency resource'. Additionally, the UL subband mentioned in this disclosure may mean the 'second frequency resource'.

This disclosure assumes SBFD operation where a cell performs DL and UL simultaneously using different frequency resources (e.g., subbands) in the same time resource. However, the content of this disclosure may also be applicable when the cell performs SSFD operation.

This disclosure may include the following UE operations.

When the UE performs DL reception in an SBFD symbol, i) the UE may perform DL reception using frequency resources within the DL subband. The UE may perform DL reception using frequency resources within the DL subband within the DL BWP. ii) The UE does not perform DL reception on frequency resources outside the DL subband. The UE does not perform DL reception using frequency resources outside the DL subband within the DL BWP.

If the UE performs UL transmission on SBFD symbols, i) the UE may use frequency resources within the UL subband to perform UL transmission. The UE may use frequency resources within the UL subband to perform UL transmission within the UL BWP. ii) The UE does not perform UL transmission on frequency resources other than the UL subband. The UE does not perform UL transmission using frequency resources other than the UL subband within the UL BWP.

In general, the UE may perform DL reception within the DL subband and UL transmission within the UL subband in time resources for which the cell is determined to operate in SBFD. However, in the case where the gNB (base station) only performs DL transmission or UL reception in the time resources for which the cell is determined to operate as SBFD, or, if necessary, performs DL transmission or UL reception through the entire band (can receive DL or UL scheduling) can be considered.

In existing TDD carriers of NR, a base station performs only one of a DL or a UL operation in a specific time resource. At this time, the base station always operates in the DL in time resources where an SSB(synchronization signal block, which may also be referred to as an SS/PBCH) is transmitted.

In a case of a UE operating in existing TDD, the following is assumed for symbols in which the SS/PBCH is transmitted.

1) SS/PBCH transmission symbols cannot be configured as the UL by TDD configuration (e.g., TDD-UL-DL-ConfigCommon and/or TDD-UL-DL-ConfigDedicated).

2) SS/PBCH transmission symbols cannot be configured as the UL by an SFI (slot format indication) of DCI format 2_0.

3) In a case where the SS/PBCH is transmitted in symbols configured as Flexible by the TDD configuration (e.g., TDD-UL-DL-ConfigCommon and/or TDD-UL-DL-ConfigDedicated), if a UL transmission of the UE overlaps with the corresponding SS/PBCH symbol, the corresponding UL transmission is not performed. For example, if a transmission of an SRS overlaps with the SS/PBCH symbol in a Flexible symbol, the SRS transmission is not performed in the overlapped symbol(s).

Meanwhile, in an FDR environment such as SBFD and SSFD, both DL and UL resources can exist in the same time resource from a viewpoint of a cell (network, base station). Accordingly, the base station can transmit the DL while simultaneously performing the UL reception.

Therefore, even in a case where the SS/PBCH is transmitted in a time resource in which the cell performs an FDR operation, the base station can perform reception of the UL transmission of the UE while transmitting the SS/PBCH.

Meanwhile, according to current standards, the UE cannot perform the UL transmission in symbol resources in which the SS/PBCH is transmitted by the network. That is, the UE cannot perform the FDR operation in the SS/PBCH transmission time resources.

In a case where a specific time resource is configured as a time resource operating in SBFD, both a DL resource and a UL resource exist in the corresponding time resource. At this time, if there is no UL signal to be received by the base station in the corresponding time resource, the base station can perform only the DL transmission. In an SBFD resource, the DL transmission of the base station is performed only within a DL subband. That is, even in a case where there is no UL signal transmitted by the UE in a UL subband, the DL transmission can be performed only within the DL subband.

Even if a specific time resource is a resource determined as an SBFD symbol, in a case where there is no UL transmission of the UE to be received by the base station, performing the DL transmission by the base station not only in the DL subband but also outside the DL subband for improving DL throughput may be considered. That is, performing the DL transmission through a full band may be considered.

In other words, in a resource determined as the SBFD symbol, performing fallback to a TDD operation for performing a DL or a UL operation through the full band, rather than an SBFD operation through the DL/UL subbands, may be considered.

Hereinafter, a UE that knows that the full duplex operation can be performed in the base station may be collectively referred to as an FD-aware UE. A UE that knows that the base station can perform a subband non-overlapping full duplex (i.e., SBFD) operation may be collectively referred to as an SBFD-aware UE. A UE that knows that the base station can perform a spectrum shared (or subband overlapping) full duplex (i.e., SSFD) operation may be referred to as an SSFD-aware UE.

In a case where both the half duplex operation and the full duplex operation are supported by the base station, information on resources (time or frequency, or both time and frequency) in which the half duplex and the full duplex can be performed (or are expected to be performed, or are requested to be performed) can be provided to the UE.

In a case where the base station can perform the SSFD operation, in a case of a full duplex base station, UL reception is simultaneously possible in some of or all frequency resources in which DL transmission of the base station is possible. That is, in some frequency resources, not only the DL transmission/reception but also the UL reception/transmission may be possible. At this time, in a case of the SSFD, information on frequency resources where the SSFD is possible can be delivered to the UE. And information on time resources where the SSFD is possible can be delivered to the UE.

In a case of a full duplex UE, the UL transmission can be simultaneously possible in some of or all frequency resources in which DL reception of the UE is possible.

Although the following description describes a method for indicating information on time(/frequency) resources for performing the SBFD, this method can also be used for indicating time(/frequency) resources for performing the SSFD in a case where the base station is capable of the half duplex and the SSFD operations.

Hereinafter, a method of determining frequency resources for PUSCH transmission in intra-carrier full duplex operation is proposed.

UE PUSCH frequency hopping procedure.

<Frequency hopping for PUSCH repetition Type A and for TBoMS (TB processing over multiple slots)>

PUSCH repetition Type A is slot-based repetition, and performs repetition with the same PUSCH transmission starting symbol position and the same PUSCH transmission symbol length (meaning the number of symbols for transmitting the PUSCH) for each slot. When there is an invalid symbol, which is not available for PUSCH transmission, among symbol resources constituting a specific PUSCH repetition, transmission of the corresponding PUSCH repetition is dropped and is not performed.

For PUSCH repetition Type A and for TBoMS, other than a PUSCH scheduled by a random access response (RAR) UL grant or a fallback RAR UL grant, or a PUSCH scheduled by a DCI format 0_0 with a CRC scrambled by a TC-RNTI, a UE may be configured with frequency hopping by i) a higher-layer parameter 'frequencyHoppingDCI-0-2' of 'pusch-Config' for a PUSCH transmission scheduled by DCI format 0_2, ii) 'frequencyHopping' provided in 'pusch-Config' for a PUSCH transmission scheduled by a DCI format other than DCI format 0_2, or iii) 'frequencyHopping' of 'configuredGrantConfig' for a configured PUSCH transmission.

For PUSCH repetition Type A scheduled by an RAR UL grant or by a DCI format 0_0 with a CRC scrambled by a TC-RNTI (temporary cell Radio Network Temporary Identifier), a UE may be configured with frequency hopping by a frequency hopping flag information field of the RAR UL grant or by a frequency hopping flag information field of the DCI format 0_0 with the CRC scrambled by the TC-RNTI.

In this case, one of two frequency hopping modes may be configured.

Intra-slot frequency hopping. This is applicable to a PUSCH transmission in a single slot and in multiple slots. For example, it is applicable to a multi-slot PUSCH transmission scheduled by DCI format 0_1 or 0_2, each multi-PUSCH transmission scheduled by DCI when a higher-layer parameter 'pusch-TimeDomainAllocationListForMultiPUSCH' is configured, and multiple configured PUSCH transmissions.

Inter-slot frequency hopping. This is applicable to a multi-slot PUSCH transmission.

For operation with shared spectrum channel access, the UE does not expect that two hops of a PUSCH transmission are in different RB sets.

For resource allocation type 2, the UE transmits a PUSCH without frequency hopping. In resource allocation type 2, a set of one or more interlace indexes may be provided to the UE.

For resource allocation type 1, regardless of whether transform precoding is enabled for PUSCH transmission, when a frequency hopping field of a detected DCI format or of an RAR UL grant is set to 1, or when a higher-layer parameter 'frequencyHoppingOffset' is provided for a type 1 PUSCH transmission with a configured grant, the UE may perform PUSCH frequency hopping. Otherwise, PUSCH frequency hopping is not performed. In resource allocation type 1, RB allocation information may indicate a set of non-interleaved virtual resource blocks that are allocated contiguously within an active BWP to the UE.

Frequency offset candidates may be configured by higher-layer parameters.

For example, when a size of an active BWP is less than 50 PRBs, one of two offsets configured by a higher-layer parameter may be indicated by a UL grant.

When the size of an active BWP is 50 PRBs or more, one of four offsets configured by a higher-layer parameter may be indicated by a UL grant.

For a PUSCH based on a Type1 configured UL grant, a frequency offset may be provided by a higher-layer parameter 'frequencyHoppingOffset' of 'rrc-ConfiguredUplinkGrant'.

For a MsgA (message A in a random access procedure) PUSCH, a frequency offset may be provided by a higher-layer parameter.

For intra-slot frequency hopping, a starting RB of each hop may be given as follows.

[Equation 1]

$$RB_{start} = \begin{cases} RB_{start} & i = 0 \\ (RB_{start} + RB_{offset})\, mod N_{BWP}^{size} & i = 1 \end{cases}$$

In the above equations, i = 0 and i = 1 are, respectively, a first hop and a second hop.

$RB_{start}$ is a starting RB within a UL BWP.

$RB_{offset}$ is a frequency offset in RBs between the two frequency hops. A number of symbols of the first hop is given by floor($N_{symb}^{PUSCH,s}$/2), and a number of symbols of the second hop is given by $N_{symb}^{PUSCH,s}$ - floor($N_{symb}^{PUSCH,s}$/2). Here, $N_{symb}^{PUSCH,s}$ is a length of a PUSCH transmission in OFDM symbols of one slot. Floor(x) is a greatest integer less than or equal to x.

For inter-slot frequency hopping, when 'PUSCH-DMRS-Bundling' is not enabled, or for inter-slot frequency hopping of a PUSCH scheduled by an RAR UL grant or by a DCI format 0_0 with a CRC scrambled by a TC-RNTI, a starting RB in slot $n_s^{\mu}$ is given by the following equation.

[Equation 2]

$$RB_{start}(n_s^{\mu}) = \begin{cases} RB_{start} & n_s^{\mu}\, mod\, 2 = 0 \\ (RB_{start} + RB_{offset})\, mod N_{BWP}^{size} & n_s^{\mu}\, mod\, 2 = 1 \end{cases}$$

In Equation 2, $n_s^{\mu}$ is a current slot number within a system radio frame in which multi-slot PUSCH transmission is possible.

$RB_{start}$ is a starting RB within a UL BWP.

$RB_{offset}$ is a frequency offset in RBs between the two frequency hops.

For inter-slot frequency hopping, when 'PUSCH-DMRS-Bundling' is enabled, or for a PUSCH not scheduled by an RAR UL grant or by a DCI format 0_0 with a CRC scrambled by a TC-RNTI, a starting RB in slot $n_s^{\mu}$ is given by the following equation.

[Equation 3]

$$RB_{start}(n_s^{\mu}) = \begin{cases} RB_{start} & \left\lfloor \frac{n_s^{\mu}}{N_{FH}} \right\rfloor mod\, 2 = 0 \\ (RB_{start} + RB_{offset}) mod N_{BWP}^{size} & \left\lfloor \frac{n_s^{\mu}}{N_{FH}} \right\rfloor mod\, 2 = 1 \end{cases}$$

In Equation 3, $n_s^{\mu}$ is a current slot number within a system radio frame.

$N_{FH}$ is a value of a higher-layer parameter 'PUSCH-Frequencyhopping-Interval', $RB_{start}$ is a starting RB within a UL BWP, and $RB_{offset}$ is a frequency offset in RBs between the two frequency hops.

<Frequency hopping for PUSCH repetition Type B>

PUSCH repetition Type B performs repetition in units of a symbol length through which an actual PUSCH is transmitted. For example, when a PUSCH is transmitted through 10 symbols, PUSCH repetition is performed in units of consecutive 10 symbols. A repetition for determining time resources for PUSCH repetition transmission without considering a slot boundary, invalid symbols, and the like is referred to as a nominal repetition. However, for an actual PUSCH repetition, one PUSCH cannot be transmitted while including a slot boundary. That is, when PUSCH transmission includes a slot boundary, two actual repetitions are performed with the slot boundary as a boundary. In addition, one PUSCH transmission may be performed only through consecutive symbols. When an invalid symbol exists in a time resource in which PUSCH repetition is to be transmitted, an actual repetition is configured using consecutive symbols with the invalid symbol as a boundary.

For PUSCH repetition Type B, a UE may be configured with frequency hopping by 'frequencyHoppingDCI-0-2', which is a higher-layer parameter of 'pusch-Config', for a PUSCH transmission scheduled by DCI format 0_2, by 'frequencyHoppingDCI-0-1' provided in 'pusch-Config' for a PUSCH transmission scheduled by DCI format 0_1, or by 'frequencyHoppingPUSCH-RepTypeB' provided in 'rrc-ConfiguredUplinkGrant' for a Type 1 configured PUSCH transmission. A frequency hopping mode for a Type 2 configured PUSCH transmission follows a configuration of an enabled DCI format.

One of two frequency hopping modes may be configured.

1) Inter-repetition frequency hopping

2) Inter-slot frequency hopping

For operation with shared spectrum channel access (e.g., SSFD), the UE does not expect that two hops of a PUSCH transmission are in different RB sets.

For resource allocation type 1, regardless of whether transform precoding is enabled for PUSCH transmission, when a frequency hopping field of a detected DCI format is set to 1, or when a higher-layer parameter 'frequencyHoppingPUSCH-RepTypeB' is provided for a type 1 PUSCH transmission with a configured grant, the UE may perform PUSCH frequency hopping, and otherwise, PUSCH frequency hopping is not performed.

For a PUSCH scheduled by DCI format 0_1 or a PUSCH based on a Type 2 configured UL grant activated by DCI format 0_1, and for resource allocation type 1, frequency offsets are configured by a higher-layer parameter 'frequency-HoppingOffsetLists' of 'pusch-Config'. For a PUSCH scheduled by DCI format 0_2 or a PUSCH based on a Type 2 configured UL grant activated by DCI format 0_2, and for resource allocation type 1, frequency offsets are configured by a higher-layer parameter 'frequencyHoppingOffsetListsDCI-0-2' of 'pusch-Config'.

When a size of an active BWP is less than 50 PRBs, one of two offsets configured by a higher layer is indicated by a UL grant.

When the size of the active BWP is 50 PRBs or more, one of four offsets configured by the higher layer is indicated by a UL grant.

For a PUSCH based on a Type1 configured UL grant, a frequency offset is provided by a higher-layer parameter 'frequencyHoppingOffset' of 'rrc-ConfiguredUplinkGrant'.

For inter-repetition frequency hopping, a starting RB for an actual repetition within an n-th nominal repetition is given by the following equation.

[Equation 4]

$$RB_{start}(n) = \begin{cases} RB_{start} & n_s^\mu \bmod 2 = 0 \\ (RB_{start} + RB_{offset}) \bmod N_{BWP}^{size} & n_s^\mu \bmod 2 = 1 \end{cases}$$

In Equation 4, $RB_{start}$ is a starting RB within a UL BWP. $RB_{offset}$ is a frequency offset in RBs between the two frequency hops.

For inter-slot frequency hopping, during slot $n_s^\mu$, a starting RB may follow inter-slot frequency hopping for PUSCH repetition Type A.

<PDSCH/PUSCH/PUCCH repetitions>

According to the existing NR standard specification, repetition is supported for transmission of a PDSCH, a PUSCH, and a PUCCH. That is, the PDSCH/PUSCH/PUCCH may be repeatedly transmitted. Repetition operations of the PDSCH, the PUSCH, and the PUCCH are as follows.

1) PDSCH

When a PDSCH is repeatedly transmitted K times, the PDSCH is repeatedly transmitted through K consecutive slots from a slot in which the PDSCH is indicated to be transmitted. Symbol resources in a slot in which the PDSCH is transmitted are determined through a TDRA (time domain resource allocation) field for the PDSCH, and the same symbol resources are used for the K slots. When at least one symbol among symbols allocated for PDSCH transmission in a specific slot constituting the PDSCH transmission cannot be used for PDSCH transmission, PDSCH transmission in the corresponding slot is dropped/omitted.

2) PUSCH

For repetition of a PUSCH, there are PUSCH repetition Type A and PUSCH repetition Type B.

a. PUSCH repetition Type A

For PUSCH repetition Type A, a repetition operation differs depending on a value of information configured by a higher layer (e.g., 'AvailableSlotCounting').

When a PDSCH is repeatedly transmitted K times, if 'AvailableSlotCounting' is enabled, a PUSCH is repeatedly transmitted through K available slots from a slot in which the PUSCH is indicated to be transmitted. In this case, the following slots are excluded from the available slots.

1) A case in which at least one symbol among symbols allocated for PUSCH transmission overlaps with a downlink symbol indicated by a cell-specific TDD UL/DL configuration 'tdd-UL-DL-ConfigurationCommon' or a UE-specific TDD UL/DL configuration 'tdd-UL-DL-ConfigurationDedicated'.

2) A case in which at least one symbol among symbols allocated for PUSCH transmission overlaps with a symbol of an SS/PBCH block having an index provided by 'ssb-PositionsInBurst' indicating a time-domain position at which an SS/PBCH block is transmitted.

When 'AvailableSlotCounting' is not enabled or is absent, a PUSCH is repeatedly transmitted through K consecutive slots from a slot in which the PUSCH is indicated to be transmitted.

In the K slots constituting the PUSCH transmission, symbol resources in which the PUSCH is transmitted are determined through a TDRA field of the PUSCH, and the same symbol resources are used in each of the K slots. When at least one symbol among symbols allocated for PUSCH transmission in a specific slot constituting the PUSCH transmission cannot be used for PUSCH transmission, PUSCH transmission in the corresponding slot is dropped/omitted.

b. PUSCH repetition Type B

For PUSCH repetition Type B, assuming that a number of symbols allocated for PUSCH transmission through a TDRA table is S and a number of repetitions of the PUSCH is K, K nominal repetitions are configured with S*K consecutive symbol resources from a first symbol in a slot in which the PUSCH is indicated to be transmitted. In this case, each nominal repetition consists of S symbols.

Each nominal repetition consists of one or more actual repetitions. Each actual repetition consists of two or more consecutive symbols. In this case, invalid symbols are excluded from symbol resources constituting an actual repetition. After excluding invalid symbols from symbol resources constituting a nominal repetition, consecutive symbol resources constitute one actual repetition. In this case, an actual repetition consists of symbols within a same slot. When consecutive symbol resources include a slot boundary, different actual repetitions are configured based on the slot boundary.

In this case, invalid symbols include the following.

1) Downlink symbols configured by 'tdd-UL-DL-ConfigurationCommon' or 'tdd-UL-DL-ConfigurationDedicated'.
2) Invalid symbols indicated by an invalid symbol pattern indicator of a UL grant.
3) SS/PBCH symbols.
4) Symbol(s) of a CORESET for a Type0-PDCCH CSS set indicated by 'pdcch-ConfigSIB1' in an MIB.
5) Invalid symbols for DL-UL switching configured by RRC.

For actual repetitions constituting a PUSCH transmission, when at least one symbol within an actual repetition cannot be used for PUSCH transmission, PUSCH transmission in the corresponding actual repetition is dropped/omitted.

3) PUCCH

When a PUCCH is repeatedly transmitted K times, the PUCCH is repeatedly transmitted through K available slots from a slot in which the PUCCH is indicated to be transmitted. In this case, the following slots are excluded from the available slots.

1) A case in which at least one symbol among symbols allocated for PUCCH transmission overlaps with a downlink symbol indicated by 'tdd-UL-DL-ConfigurationCommon' or 'tdd-UL-DL-ConfigurationDedicated'.
2) A case in which at least one symbol among symbols allocated for PUCCH transmission overlaps with a symbol of an SS/PBCH block having an index provided by 'ssb-PositionsInBurst'.

The same symbol resources are used for PUCCH transmission in each of the K slots constituting the PUCCH transmission. When at least one symbol among symbols allocated for PUCCH transmission in a specific slot constituting the PUCCH transmission cannot be used for PUCCH transmission, PUCCH transmission in the corresponding slot is dropped/omitted.

However, when a UE transmits an uplink channel (e.g., a PUCCH or a PUSCH) in an SBFD environment, frequency resources that can be used for UL transmission may differ between an HD slot and an SBFD slot.

In consideration of this, the present disclosure proposes a method of determining frequency resources for uplink channel transmission in intra-carrier full duplex operation.

The present disclosure is described on the assumption of an SBFD operation in which a cell simultaneously performs a DL operation and a UL operation using different frequency resources (e.g., subbands) in a specific time resource. However, the content of the present disclosure may also be applied when a cell performs an SSFD operation.

A base station may perform a full duplex operation and a UE may perform a half duplex operation, or a base station may perform a half duplex operation and a UE may perform a full duplex operation. Alternatively, both a base station and a UE may support a full duplex operation.

If a specific UE is a UE that knows that a base station is capable of performing full duplex operation, the specific UE may be referred to as an FD-aware UE. When a base station is capable of performing a subband non-overlapping full duplex (i.e., SBFD) operation, a UE that knows such information may be referred to as an SBFD-aware UE. When a base station is capable of performing a spectrum sharing (or subband overlapping) full duplex (i.e., SSFD) operation, a UE that knows such information may be referred to as an SSFD-aware UE.

When a base station supports performing both a half duplex operation and a full duplex operation, the base station may inform the UE of information on resources (e.g., time and/or frequency) in which half duplex and full duplex can be performed (or are expected to be performed, or are to be performed).

In the case of a full duplex (e.g., SSFD operation) base station, UL reception is possible simultaneously in some and/or all of frequency resources in which DL transmission is possible in the base station. That is, in some frequency resources, not only DL transmission/reception but also UL reception/transmission may be possible. In this case, for SSFD, information on frequency resources in which SSFD is possible may be delivered. Further, information on time resources in which SSFD is possible may be delivered.

In the case of a full duplex UE, UL transmission may be possible simultaneously in some and/or all of frequency resources in which DL reception is possible in the UE. In the present disclosure, a UE performing a half duplex operation is referred to as an HD UE, and a UE capable of performing (or performing) a full duplex operation is referred to as an FD UE.

When a base station performs a full duplex operation such as SBFD or SSFD, the base station may perform SSFD and/or SBFD operation only for some time/frequency resources. For an SBFD-aware UE and/or an SSFD-aware UE, when the UE knows time/frequency resources in which a cell performs SSFD and/or SBFD operation, the UE may perform different operations depending on resources in which the cell operates in half duplex (HD), resources in which the cell operates in SBFD, and resources in which the cell operates in SSFD. For example, the UE may perform transmission and reception by differently determining time/frequency resources for receiving a DL signal/channel and/or transmitting a UL signal/channel depending on an HD resource, an SBFD resource, and an SSFD resource.

Through the contents of the present disclosure, the base station and the UE can operate as follows.

The base station performs the half duplex operation of performing only one of DL transmission or UL reception in all frequency resources constituting a corresponding cell in a time resource operating as HD, and in time resources operating as SBFD and SSFD, the base station performs the full duplex operation of performing DL transmission through a first frequency resource (i.e., DL subband resource) within the frequency resources constituting the corresponding cell and simultaneously performing UL reception through a second frequency resource (i.e., UL subband resource) within the frequency resources constituting the corresponding cell.

For this, the base station determines/decides a time resource corresponding to a first time resource (i.e., HD symbol) and a second time resource (i.e., FD symbol) and transmits configuration information on the first time resource (i.e., HD symbol) and/or the second time resource (i.e., FD symbol) to the UE. The FD symbol may comprise at least one of the SBFD symbol and the SSFD symbol. More specifically, the base station determines/decides time resources corresponding to the HD symbol, the SBFD symbol, and/or the SSFD symbol, and transmits configuration information on the HD symbol, the SBFD symbol, and/or the SSFD symbol to the UE.

At this time, the DL subband resource and/or the UL subband resource in the time resource operating as SBFD and the time resource operating as SSFD can be configured differently. In the time resource operating as SBFD, the DL subband resource and the UL subband resource are configured not to overlap with each other. In the time resource operating as SSFD, the DL subband resource and the UL subband resource can be configured to overlap with each other. DL subband/UL subband resources may be composed of only a part of frequency resources of a system bandwidth, or may be composed of all frequency resources of the system bandwidth.

The UE receives configuration information on the HD symbol, the SBFD symbol, and/or the SSFD symbol from a network to determine positions of the HD symbol, the SBFD symbol, and/or the SSFD symbol. In the HD symbol, the UE performs DL reception (UL transmission) through all frequency resources configured for the UE to operate the DL reception (UL transmission), and in the SBFD symbol and/or the SSFD symbol, the UE performs the DL reception (UL transmission) through DL subband (UL subband) resources which are same as or limited compared to the frequency resources in which the UE performs the DL reception (UL transmission) in the HD symbol. In this case, even if the UE is configured with the DL reception (UL transmission) to frequency resources not corresponding to the DL subband resource (UL subband resource) in the SBFD symbol and/or the SSFD symbol resource, the UE does not perform the DL reception (UL transmission) in frequency resources not corresponding to the DL subband resource (UL subband resource).

When a cell operates in SBFD, there may be frequency resources that a UE cannot use for UL operation within UL BWP resources in which the UE operates. For example, a DL subband and/or a guard subband may exist within the UL BWP resources. While an HD slot consists of only DL frequency resources or only UL frequency resources, an SBFD slot includes both DL frequency resources and UL frequency resources.

In the present disclosure, when there exist frequency resources (e.g., a DL subband and a guard subband) that cannot be used for UL transmission within UL BWP resources in an SBFD slot, a method of determining transmission frequency resources of a PUSCH is proposed.

Hereinafter, description is provided assuming transmission of a PUSCH; however, the proposal of the present disclosure may also be applied to a PUCCH or a PDSCH.

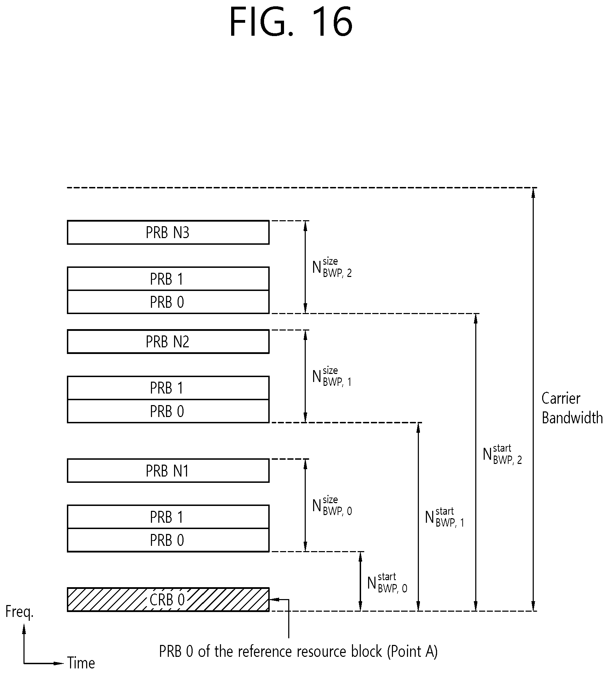

FIG. 16 illustrates an example of a BWP.

In the embodiment of FIG. 16, a case in which three BWPs exist within a carrier bandwidth is illustrated.

Referring to FIG. 16, a common resource block (CRB) may be a resource block numbered from one end to the other end of the carrier bandwidth. A PRB may be a resource block numbered within each BWP. Point A may indicate a common reference point for a resource block grid.

A BWP may be configured by Point A, an offset ($N^{start}_{BWP}$) from Point A, and a bandwidth ($N^{size}_{BWP}$). For example, Point A may be an external reference point at which subcarrier 0 of all numerologies (e.g., all numerologies supported by a network on the carrier) is aligned. For example, the offset ($N^{start}_{BWP}$) may be a PRB spacing between a lowest subcarrier in a given numerology and Point A. For example, the bandwidth ($N^{size}_{BWP}$) may be a number of PRBs in a given numerology.

In the present disclosure, it is assumed that, in a specific slot, frequency resources in which a PUSCH is transmitted consist of P contiguous PRBs from a lowest PRB (i.e., a PRB having a lowest index). In this case, a starting RB (hereinafter, may be indicated as $RB_{start}$) may be as follows.

When a PUSCH does not perform frequency hopping, the lowest PRB may be '$RB_{start}$'.

When a PUSCH performs frequency hopping, the lowest PRB may mean '$RB_{start}$' or '$RB_{start} + RB_{offset}$' depending on a hop number.

In inter-slot frequency hopping, when 'PUSCH-DMRS-Bundling' is not enabled, a starting RB in slot $n_s^{\mu}$ may be given by the following equation.

[Equation 5]

$$RB_{start}(n_s^{\mu}) = \begin{cases} RB_{start} & n_s^{\mu} \bmod 2 = 0 \\ (RB_{start} + RB_{offset}) \bmod N_{BWP}^{size} & n_s^{\mu} \bmod 2 = 1 \end{cases}$$

In Equation 5, $n_s^{\mu}$ indicates (also referred to as specifies) a current slot number within a system radio frame in which multi-slot PUSCH transmission is possible. $RB_{start}$ is a starting RB within a UL BWP. For example, $RB_{start}$ may mean a starting RB within the UL BWP indicated through an FDRA field of a DCI (a UL grant).

$RB_{offset}$ is a frequency offset in RBs between two frequency hops. In this case, candidate values of $RB_{offset}$ are configured through 'FrequencyHoppingOffsetLists', and an $RB_{offset}$ value to be applied among the candidate values may be indicated through the FDRA (frequency domain resource assignment) field of the DCI.

For resource allocation type 1, LSBs (least significant bits) of the FDRA field, the number of which is $\lceil log_2(N_{RB}^{UL,BWP}(N_{RB}^{UL,BWP} + 1)/2) \rceil$, provide resource allocation as follows.

1) For PUSCH hopping of resource allocation type 1, $N_{UL\_hop}$ MSB (most significant bit) bits are used to indicate a frequency offset. When two offset values are included in a higher-layer parameter 'frequencyHoppingOffsetLists', $N_{UL\_hop} = 1$, and when four offset values are included in the higher-layer parameter 'frequencyHoppingOffsetLists', $N_{UL\_hop} = 2$.

2) And, bits, the number of which is $\lceil log_2(N_{RB}^{UL,BWP}(N_{RB}^{UL,BWP} + 1)/2) \rceil - N_{UL\_hop}$, provide frequency-domain resource allocation.

3) For non-PUSCH hopping of resource allocation type 1, bits, the number of which is $\lceil log_2(N_{RB}^{UL,BWP}(N_{RB}^{UL,BWP} + 1)/2) \rceil$, provide frequency-domain resource allocation.

A. Method of determining PUSCH transmission frequency resources according to a transmission slot type.

When a DL/guard subband exists within a UL BWP in an SBFD slot, there is a need to change a location and an amount of PUSCH transmission frequency resources in the SBFD slot compared to those in an HD slot. To this end, by at least one of the following methods, PUSCH transmission frequency resources may be determined according to a slot type (an HD slot or an SBFD slot) of a slot in which a PUSCH is transmitted.

Method 1. An existing method for configuring and indicating frequency resources of a PUSCH is used as it is, and a network may appropriately configure PUSCH resources such that a PUSCH is not transmitted in DL/guard subband resources, and may indicate, through DCI, an $RB_{offset}$ value to be applied.

In this case, in consideration of that appropriate PUCCH resources in an HD slot and in an SBFD slot may be different from each other, 'frequencyHoppingOffsetLists' may be configured to include more offset values than existing two or four offset values so that more various $RB_{offset}$ values can be indicated.

Method 2. In 'PUSCH-Config', an additional 'frequencyHoppingOffsetLists' for an SBFD slot may be configured in addition to an existing 'frequencyHoppingOffsetLists'.

In this case, the existing 'frequencyHoppingOffsetLists' is applied in an HD slot, and the additional 'frequency-HoppingOffsetLists' may be applied in an SBFD slot. Offset values included in 'frequencyHoppingOffsetLists' for the SBFD slot may be configured to avoid the DL subband and the guard subband.

In this case, the UE may determine an $RB_{offset}$ value to be applied to PUSCH transmission using offset values included in the existing 'frequencyHoppingOffsetLists' applied to an HD slot when a slot type of a slot in which the PUSCH is transmitted is an HD slot, and may determine an $RB_{offset}$ value to be applied to PUSCH transmission using offset values included in the 'frequencyHoppingOffsetLists' applied to the SBFD slot when the slot type is an SBFD slot.

In this case, the UE may use the same bits ($N_{UL\_hop}$ MSB bits) in the FDRA field of the DCI to determine an $RB_{offset}$ value in a UL slot and in an SBFD slot.

Alternatively, to determine an $RB_{offset}$ value in a UL slot and in an SBFD slot, the UE may use different bits in the FDRA field of the DCI. In this case, in the UL slot, as in the related art, the UE may determine an $RB_{offset}$ value to be applied based on the $N_{UL\_hop}$ MSB bits in the FDRA field of the DCI, and in the SBFD slot, the UE may determine an $RB_{offset}$ value to be applied based on other $N_{UL\_hop}$ bits in the FDRA field of the DCI.

Method 3. An $RB_{offset}$ value is determined based on the same 'frequencyHoppingOffsetLists' in a UL slot and in an SBFD slot, but different bits in the FDRA field of the DCI may be used to determine an $RB_{offset}$ value in the UL slot and in the SBFD slot.

The UE may determine an $RB_{offset}$ value to be applied based on the $N_{UL\_hop}$ MSB bits in the FDRA field of the DCI in the UL slot as in the related art, and may determine an $RB_{offset}$ value to be applied based on other $N_{UL\_hop}$ bits in the FDRA field of the DCI in the SBFD slot.

Method 4. In DCI scheduling a PUSCH, an FDRA field for an SBFD slot may be additionally included in addition to an existing FDRA field.

The UE may determine $RB_{start}$, an RB size, and/or an $RB_{offset}$ value to be applied for PUSCH transmission based on the existing FDRA field in the UL slot, and may determine $RB_{start}$, an RB size, and/or an $RB_{offset}$ value to be applied for PUSCH transmission based on the FDRA field for the SBFD slot in the SBFD slot.

In this case, an $RB_{offset}$ value may be determined based on the same 'frequencyHoppingOffsetLists' in the UL slot and in the SBFD slot. Alternatively, in 'PUSCH-Config', an additional 'frequencyHoppingOffsetLists' for an SBFD slot may be configured in addition to an existing 'frequencyHoppingOffsetLists', and in an HD slot, an $RB_{offset}$ value may be determined by applying the existing 'frequencyHoppingOffsetLists', and in an SBFD slot, an $RB_{offset}$ value may be determined by applying the additional 'frequencyHoppingOffsetLists'.

In addition, in consideration of that it is complicated/difficult to configure PUSCH transmission PRB resources in an SBFD slot in consideration of frequency hopping, frequency hopping may be disabled in an SBFD environment. The UE may determine that frequency hopping is not always applied in the SBFD environment.

B. Method of determining transmission frequency resources per slot in PUSCH repetition

When a PUSCH is repeatedly transmitted through multiple slot resources, the PUSCH may be transmitted across an HD slot and an SBFD slot. In this case, there is a need to determine on which slot type the UE will determine frequency resources of the PUSCH.

In the present disclosure, a method of determining a slot type (an HD slot or an SBFD slot), which is a criterion for determining PUSCH transmission frequency resources per PUSCH transmission slot, is proposed.

The content of the present disclosure may also be applied to a case in which a PUSCH is transmitted without repetition (i.e., a case in which a number of repetitions is 1).

Alt 1. For each slot resource in which a PUSCH is repeatedly transmitted, in an HD slot, a location of frequency resources in which the PUSCH is transmitted may be determined and applied based on the HD slot, and in an SBFD slot, a location of frequency resources in which the PUSCH is transmitted may be determined and applied based on the SBFD slot. In this case, for the same PUSCH, frequency resources constituting PUSCH transmission may differ depending on a slot in which the PUSCH is repeatedly transmitted.

Alt 2. When slot resources through which a PUSCH is repeatedly transmitted include at least one SBFD slot, in all PUSCH transmission slot resources, a location of frequency resources in which the PUSCH is transmitted may be determined and applied based on the SBFD slot.

Alt 3. When a cell operates in SBFD, or when there exists an SBFD-operating slot in a cell, in slot resources through which a PUSCH is repeatedly transmitted, a location of frequency resources in which the PUSCH is transmitted may be always determined and applied based on an SBFD slot. This method may be applied even when slot resources through which a PUSCH is repeatedly transmitted do not include an SBFD slot.

Alt 4. For slot resources through which a PUSCH is repeatedly transmitted, a location of frequency resources in which the PUSCH is transmitted may be determined and applied based on one same slot type among an HD slot and an SBFD slot. In this case, information on a slot type for determining frequency resources of the PUSCH among an HD slot and an SBFD slot may be dynamically indicated by a base station through RRC/DCI and the like. More specifically, the following method may be applied.

Alt 4-1. A slot type of a slot in which a PUSCH is transmitted may be indicated through an explicit field in DCI.

Alt 4-2. A slot type of a slot in which a PUSCH is transmitted may be indicated through a TDRA field in DCI. For example, a new column may be added to a TDRA field, and in the corresponding column, a slot type of a slot in which the PUSCH is transmitted may be configured.

Alt 4-3. A slot type of a slot in which a PUSCH is transmitted may be indicated through an FDRA (frequency domain resource allocation) field in DCI. For example, a specific bit of the FDRA field may be used to indicate a slot type of a slot in which the PUSCH is transmitted.

C. Starting PRB location for frequency hopping.

When a UE performs UL transmission in a time resource in which a cell operates in SBFD, the UE may perform UL transmission through frequency resources included in a UL subband among resources within a UL BWP.

When a UE performs UL transmission, in a time resource in which a cell operates in SBFD, all or a part of frequency resources within a UL BWP may not be included in a UL subband. In this case, the UE may not be able to perform UL transmission in the same manner as in a non-SBFD time resource. In particular, when frequency resources of a UL signal/channel transmitted by the UE include frequency resources outside a UL subband, the UE may not be able to perform UL transmission in an SBFD time resource as in a non-SBFD time resource.

In the present disclosure, when a cell performs SBFD operation, a method of determining frequency resources for transmitting a PUSCH when applying frequency hopping for PUSCH transmission is proposed. Hereinafter, the following description is based on PUSCH transmission to which frequency hopping is applied; however, the description may also be applied to transmission of a PUCCH to which frequency hopping is applied.

From a first time resource allocated for PUSCH transmission, transmission frequency resources of the PUSCH may be periodically changed using a plurality of (e.g., two) frequency resources. The UE may transmit the PUSCH by applying hopping for changing frequency resources of PUSCH transmission for an n-th time at an n-th period from the first time resource of PUSCH transmission. Depending on a frequency hopping method, a period in which each hopping is performed may vary, such as a plurality of symbol(s), one slot, one repetition, a plurality of repetitions, and the like.

In this case, a position of a first RB among RB resources in which the UE performs PUSCH transmission in an n-th hopping (hop) may be as shown in the following equation.

[Equation 6]

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}$$

Equation 6 may be used to obtain a first RB in a non-SBFD symbol (e.g., an HD symbol).

In Equation 6, depending on a frequency hopping method, n may mean the following.

1) For PUSCH repetition Type A and TBoMS (TB processing over multiple slots) transmission,

when intra-slot frequency hopping is applied, n may mean 0 and 1 for transmission of a first hop and a second hop within a slot, respectively.
when inter-slot frequency hopping is applied and DMRS bundling is not performed (e.g., when 'PUSCH-DMRS-Bundling' is not enabled), n may mean an index of each slot (i.e., $n_s^\mu$) in which the PUSCH is transmitted. $n_s^\mu$ is a current slot number within a system radio frame.
when inter-slot frequency hopping is applied and DMRS bundling is performed (e.g., when 'PUSCH-DMRS-Bundling' is enabled), n may mean $\left\lfloor \frac{n_s^\mu}{N_{FH}} \right\rfloor$. In this case, $n_s^\mu$ is a current slot number within a system radio frame, and $N_{FH}$ is a value of a higher-layer parameter 'PUSCH-Frequencyhopping-Interval'.

2) For PUSCH repetition Type B transmission, n may mean an index of a nominal repetition.

Meanwhile, frequency resources in which the UE can perform PUSCH transmission may differ between a case in which the UE performs PUSCH transmission through SBFD symbol(s) and a case in which the UE performs PUSCH transmission through non-SBFD symbol(s). This is because a location and an amount of frequency resources that the UE can use for UL transmission may differ depending on an SBFD symbol and a non-SBFD symbol.

For example, in a non-SBFD symbol, the UE may use resources within a UL BWP for UL transmission within frequency resources configuring a cell. In contrast, in an SBFD symbol, the UE may use, for UL transmission, resources that are included in both a UL BWP and a UL subband within frequency resources configuring the cell.

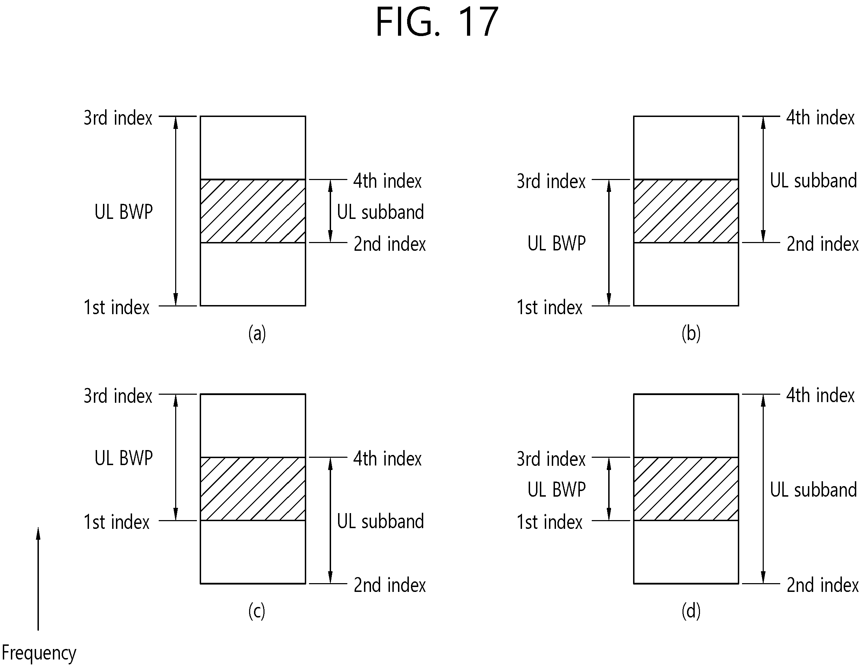

FIG. 17 illustrates various inclusion relationships between a UL BWP and a UL subband in a frequency domain.

Referring to FIG. 17, the UL BWP and the UL subband may be composed of contiguous resource blocks in the frequency domain, and the contiguous resource blocks may be indexed in ascending order. For example, among resource blocks constituting the UL BWP, a lowest index may be assigned to a resource block having a lowest frequency, and a highest index may be assigned to a resource block having a highest frequency.

Since the UL subband is configured within a system bandwidth (or a carrier), there may be no guarantee that the UL subband is always entirely included within the UL BWP.

Among indices of resource units (e.g., resource blocks) constituting the UL BWP, a lowest index may be referred to, for convenience, as a first index, and among indices of resource units (e.g., resource blocks) constituting the UL subband, a lowest index may be referred to, for convenience, as a second index.

Among indices of resource units (e.g., resource blocks) constituting the UL BWP, a highest index may be referred to, for convenience, as a third index, and among indices of resource units (e.g., resource blocks) constituting the UL subband, a highest index may be referred to, for convenience, as a fourth index.

In (a) of FIG. 17, a case in which the UL subband is included within the UL BWP is illustrated. In terms of resource indices, it may be said that the second index is greater than or equal to the first index, and the fourth index is less than or equal to the third index.

In (b) of FIG. 17, a case in which the UL BWP and the UL subband partially overlap is illustrated. In terms of resource indices, it may be said that the second index is greater than the first index and the fourth index is greater than the third index.

In (c) of FIG. 17, another case in which the UL BWP and the UL subband partially overlap is illustrated. In terms of resource indices, it may be said that the second index is less than or equal to the first index and the fourth index is less than the third index.

In (d) of FIG. 17, a case in which the UL BWP is included within the UL subband is illustrated. In terms of resource indices, it may be said that the second index is less than or equal to the first index and the fourth index is greater than the third index.

Meanwhile, when a UE performs PUSCH transmission to which frequency hopping is applied in the same manner as in Equation 2, frequency resources that cannot be used for UL transmission may be included in RB resources in which the PUSCH transmission is performed.

For example, if a first RB position for PUSCH transmission of an n-th hop (i.e., $RB_{start}(n)$) is included in frequency resources within the UL BWP but is not included in the UL subband, a result may occur in which frequency resources for performing PUSCH transmission in an SBFD symbol overlap with frequency resources that cannot be used for UL transmission.

Accordingly, in order for both PUSCH transmission in the n-th hop and PUSCH transmission in the (n+1)-th hop within an SBFD symbol to be included in frequency resources in which the UE can perform UL transmission, both a position of $RB_{start}$ and a position of $'(RB_{start}+RB_{offset})$ mod $N_{size}^{BWP}$' should be included in resources in which the UE can perform UL transmission in the SBFD symbol.

Hereinafter, in order for a first RB position for PUSCH transmission (i.e., $RB_{start}(n)$) to be included in frequency resources that can be used by the UE for UL transmission in an SBFD symbol, a method of determining a first RB position for PUSCH transmission is proposed.

In the present disclosure, that a UE transmits a PUSCH in an SBFD symbol may mean that, among symbol resources constituting one PUSCH transmission (a PUSCH transmission occasion), at least one SBFD symbol is included. Alternatively, it may mean that symbol resources constituting one PUSCH transmission (a PUSCH transmission occasion) are all composed of SBFD symbols.

In the present disclosure, that a UE transmits a PUSCH in a non-SBFD symbol may mean that symbol resources constituting one PUSCH transmission (a PUSCH transmission occasion) are all composed of non-SBFD symbols. Alternatively, it may mean that, among symbol resources constituting one PUSCH transmission (a PUSCH transmission occasion), at least one non-SBFD symbol is included.

In the present disclosure, when the UE performs PUSCH transmission by applying frequency hopping in an SBFD symbol, the UE may determine a position of a first RB of PUSCH transmission in an n-th hopping (hop) as in the following Equation 7 or Equation 8.

[Equation 7]

$$RB_{\text{start}}(n) = \begin{cases} RB_{\text{start}} + RB_{\text{offset,SBFD}} & n \bmod 2 = 0 \\ \left(RB_{\text{start}} + RB_{\text{offset}} + RB_{\text{offset,SBFD}}\right) \bmod N_{BWP,SBFD}^{size} & n \bmod 2 = 1 \end{cases}$$

[Equation 8]

$$RB_{\text{start}}(n) = \begin{cases} RB_{\text{start}} + RB_{\text{offset,SBFD}} & n \bmod 2 = 0 \\ \left(RB_{\text{start}} + RB_{\text{offset}}\right) \bmod N_{BWP,SBFD}^{size} + RB_{\text{offset,SBFD}} & n \bmod 2 = 1 \end{cases}$$

In Equation 7 and Equation 8, $RB_{\text{offset,SBFD}}$ may be as follows.

$RB_{\text{offset,SBFD}}$ denotes an RB offset value applied by the UE to determine a position of $RB_{\text{start}}(n)$ in an SBFD symbol. $RB_{\text{offset,SBFD}}$ may be used to prevent a position of $RB_{\text{start}}(n)$ in an SBFD symbol from not being included in resources of the UL subband.

In this case, $RB_{\text{offset,SBFD}}$ may denote an offset value of 'a lowest RB position among overlapped RB resources between frequency resources constituting the UL subband and frequency resources constituting the UL BWP' relative to 'a lowest RB position constituting the UL BWP'.

Stated differently, $RB_{\text{offset,SBFD}}$ may denote a PRB index of 'a lowest RB position among overlapped RB resources between frequency resources constituting the UL subband and frequency resources constituting the UL BWP'.

More specifically, $RB_{\text{offset,SBFD}}$ may be as follows.

When a lowest RB position of the UL subband is greater than a lowest RB position of the UL BWP (i.e., when a CRB index of the lowest RB of the UL subband is greater than a CRB index of the lowest RB of the UL BWP), $RB_{\text{offset,SBFD}}$ may denote an offset value of 'the lowest RB position of the UL subband' relative to 'the lowest RB position constituting the UL BWP'.

Stated differently, $RB_{\text{offset,SBFD}}$ may denote an offset value of 'a CRB index of the lowest RB position constituting the UL subband' relative to 'a CRB index of the lowest RB position constituting the UL BWP'. That is, $RB_{\text{offset,SBFD}}$ may denote 'a CRB index of the lowest RB position constituting the UL subband' - 'a CRB index of the lowest RB position constituting the UL BWP'.

Alternatively, stated differently, $RB_{\text{offset,SBFD}}$ may denote a PRB index corresponding to 'the lowest RB position constituting the UL subband'.

When a lowest RB position of the UL subband is less than or equal to a lowest RB position of the UL BWP (i.e., when a CRB index of the lowest RB of the UL subband is less than or equal to a CRB index of the lowest RB of the UL BWP), $RB_{\text{offset,SBFD}}$ may be equal to 0.

The UE may determine an $RB_{\text{offset,SBFD}}$ value using frequency resource information constituting the UL BWP and/or the UL subband as described above.

Additionally/independently, the $RB_{\text{offset,SBFD}}$ value may be a value indicated to the UE by the network through RRC/DCI signaling or the like. To this end, the UE may receive an indication of the $RB_{\text{offset,SBFD}}$ value from the network. If there is no such indication, the UE may determine the $RB_{\text{offset,SBFD}}$ value as described above. Alternatively, if there is no such indication, the UE may determine the $RB_{\text{offset,SBFD}}$ value to be 0.

Additionally, when the UE transmits the PUSCH in a non-SBFD symbol or when the UE does not transmit the PUSCH in an SBFD symbol, the UE may determine the $RB_{\text{offset,SBFD}}$ value to be 0.

In Equation 7 and Equation 8, $N_{BWP,SBFD}^{size}$ may be as follows.

$N_{BWP,SBFD}^{size}$ denotes a parameter applied by the UE, when performing PUSCH transmission by applying frequency hopping, to restrict a position of $RB_{\text{start}}(n)$ in an SBFD symbol to resources within the UL subband in order to prevent a position of $RB_{\text{start}}(n)$ in an odd-numbered hop from not being included in resources of the UL subband.

In this case, $N_{BWP,SBFD}^{size}$ may denote a size of overlapped RB resources between frequency resources constituting the UL BWP and frequency resources constituting the UL subband in an SBFD symbol.

More specifically, $N_{BWP,SBFD}^{size}$ may be as follows.

When a lowest RB position of the UL subband is greater than a lowest RB position of the UL BWP (i.e., when a CRB index of the lowest RB of the UL subband is greater than a CRB index of the lowest RB of the UL BWP), if a highest RB position of the UL subband is greater than a highest RB position of the UL BWP (i.e., when a CRB index of the highest RB of the UL subband is greater than a CRB index of the highest RB of the UL BWP), $N_{BWP,SBFD}^{size}$ may denote a number of RBs from 'the lowest RB position constituting the UL subband' to 'the highest RB position constituting the UL BWP'.

Stated differently, $N_{BWP,SBFD}^{size}$ may denote a value obtained by adding 1 to an offset value of 'a CRB index of the highest RB position constituting the UL BWP' relative to 'a CRB index of the lowest RB constituting the UL subband'. That is, $N_{BWP,SBFD}^{size}$ may denote 'a CRB index of the highest RB position constituting the UL BWP' - 'a CRB index of the lowest RB constituting the UL subband' + 1.

Alternatively, stated differently, $N_{BWP,SBFD}^{size}$ may denote a value obtained by adding 1 to an offset value of 'a

EP 4 779 918 A1

PRB index of the highest RB position constituting the UL BWP' relative to 'a PRB index corresponding to the lowest RB constituting the UL subband'. That is, $N_{BWP,SBFD}^{size}$ may denote 'a PRB index of the highest RB position constituting the UL BWP' - 'a PRB index corresponding to the lowest RB constituting the UL subband' + 1.

When a highest RB position of the UL subband is less than a highest RB position of the UL BWP (i.e., when a CRB index of the highest RB of the UL subband is less than a CRB index of the highest RB of the UL BWP), $N_{BWP,SBFD}^{size}$ may denote an RB size of frequency resources constituting the UL subband.

Stated differently, $N_{BWP,SBFD}^{size}$ may denote a number of RBs from 'the lowest RB position constituting the UL subband' to 'the highest RB position constituting the UL subband'. That is, $N_{BWP,SBFD}^{size}$ may denote 'a CRB index of the highest RB position constituting the UL subband' - 'a CRB index of the lowest RB constituting the UL subband' + 1.

Alternatively, stated differently, $N_{BWP,SBFD}^{size}$ may denote a value obtained by adding 1 to an offset value of 'a PRB index of the highest RB position constituting the UL subband' relative to 'a PRB index corresponding to the lowest RB constituting the UL subband'. That is, $N_{BWP,SBFD}^{size}$ may denote 'a PRB index of the highest RB position constituting the UL subband' - 'a PRB index corresponding to the lowest RB constituting the UL subband' + 1.

When a lowest RB position of the UL subband is less than or equal to a lowest RB position of the UL BWP (i.e., when a CRB index of the lowest RB of the UL subband is less than or equal to a CRB index of the lowest RB of the UL BWP), if a highest RB position of the UL subband is greater than a highest RB position of the UL BWP (i.e., when a CRB index of the highest RB of the UL subband is greater than a CRB index of the highest RB of the UL BWP), $N_{BWP,SBFD}^{size}$ may be equal to $N_{BWP}^{size}$.

When a highest RB position of the UL subband is less than a highest RB position of the UL BWP (i.e., when a CRB index of the highest RB of the UL subband is less than a CRB index of the highest RB of the UL BWP), $N_{BWP,SBFD}^{size}$ may denote a number of RBs from 'the lowest RB position constituting the UL BWP' to 'the highest RB position constituting the UL subband'.

Stated differently, $N_{BWP,SBFD}^{size}$ may denote a value obtained by adding 1 to an offset value of 'a CRB index of the highest RB position constituting the UL subband' relative to 'a CRB index of the lowest RB position constituting the UL BWP'. That is, $N_{BWP,SBFD}^{size}$ may denote 'a CRB index of the highest RB position constituting the UL subband' - 'a CRB index of the lowest RB position constituting the UL BWP' + 1.

Alternatively, stated differently, $N_{BWP,SBFD}^{size}$ may denote a value obtained by adding 1 to an offset value of 'a PRB index of the highest RB position constituting the UL subband' relative to 'a PRB index corresponding to the lowest RB constituting the UL BWP'. That is, $N_{BWP,SBFD}^{size}$ may denote 'a PRB index of the highest RB position constituting the UL subband' - 'a PRB index corresponding to the lowest RB constituting the UL BWP' + 1.

In this case, when the UE transmits the PUSCH in a non-SBFD symbol or when the UE does not transmit the PUSCH in an SBFD symbol, the UE may determine the $N_{BWP,SBFD}^{size}$ value to be $N_{BWP}^{size}$.

Additionally, while applying the above proposal, an $RB_{offset}$ value may be configured/determined differently depending on whether the UE transmits the PUSCH in an SBFD symbol or transmits the PUSCH in a non-SBFD symbol.

A method of determining an $RB_{offset}$ value differently in an SBFD symbol and a non-SBFD symbol by the UE may be the same as described in the above section "A. Method of determining PUSCH transmission frequency resources according to a transmission slot type."

In this case, an SBFD slot may mean a slot in which, among symbol resources in which the PUSCH is transmitted within the slot, at least one symbol is an SBFD symbol. Further, a non-SBFD slot or a UL slot or an HD slot may mean a slot in which symbol resources in which the PUSCH is transmitted within the slot are all composed of non-SBFD symbols.

Alternatively, an SBFD slot may mean a slot in which symbol resources in which the PUSCH is transmitted within the slot are all composed of SBFD symbols. Further, a non-SBFD slot or a UL slot or an HD slot may mean a slot in which, among symbol resources in which the PUSCH is transmitted within the slot, at least one non-SBFD symbol is included.

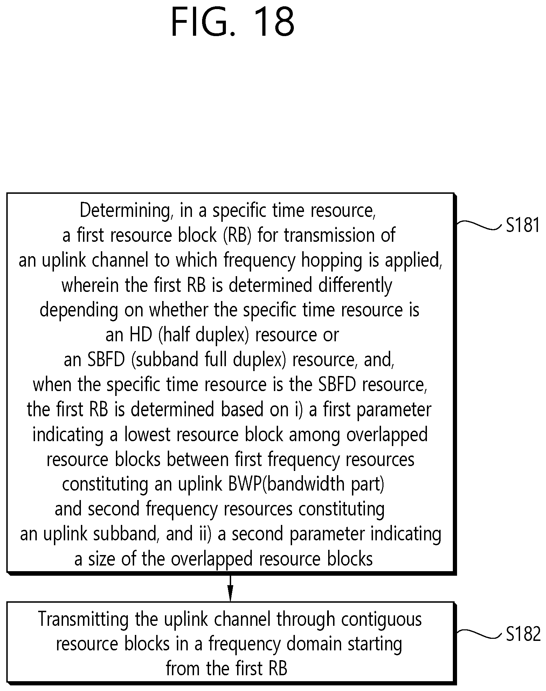

FIG. 18 illustrates an example of an operation method of a UE in a wireless communication system.

Referring to FIG. 18, the UE determines, in a specific time resource, a first resource block (resource block: RB) for a transmission of an uplink channel to which frequency hopping is applied. Here, the UE determines the first RB differently depending on whether the specific time resource is an HD (half duplex) resource or an SBFD (subband full duplex) resource, and, when the specific time resource is the SBFD resource, the first RB is determined based on i) a first parameter (e.g., $RB_{offset,SBFD}$) indicating (also referred to as specifying) a lowest RB among overlapped RB resources between first frequency resources constituting an uplink (UL) BWP(bandwidth part) and second frequency resources constituting a UL subband, and ii) a second parameter (e.g., $N_{BWP,SBFD}^{size}$) indicating a size of the overlapped RB resources (S181).

The UE transmits the uplink channel through contiguous RBs in a frequency domain starting from the first RB (S182).

The first RB may correspond to $RB_{start}(n)$ of the above-described Equation 7 or Equation 8. According to an embodiment, the first RB may correspond to $RB_{start}(n)$ of Equation 9 or Equation 10 described later.

The SBFD resource may be, for example, an SBFD symbol/slot.

A value of the first parameter may vary depending on locations of the first frequency resources and the second frequency resources, i.e., which one of the relative positional relationships between the UL BWP (the first frequency resources) and the UL subband (the second frequency resources) exemplified in FIG. 17 is satisfied.

For example, when a second index that is a lowest RB index of the UL subband is greater than a first index that is a lowest RB index of the UL BWP (i.e., the case of (a) or (b) of FIG. 17), the first parameter may indicate an offset between the second index and the first index.

When the second index is less than or equal to the first index (i.e., the case of (c) or (d) of FIG. 17), the first parameter may indicate a value of 0.

When the second index is greater than the first index and a fourth index that is a highest RB index of the UL subband is less than or equal to a third index that is a highest RB index of the UL BWP (i.e., the situation of (a) of FIG. 17), the second parameter may indicate the number of RBs constituting the UL subband.

When the second index is greater than the first index and the fourth index is greater than the third index (i.e., the situation of (b) of FIG. 17), the second parameter may indicate the number of RBs from the second index to the third index.

When the second index is less than or equal to the first index and the fourth index is less than or equal to the third index (i.e., the situation of (c) of FIG. 17), the second parameter may indicate the number of RBs from the first index to the fourth index.

When the second index is less than or equal to the first index and the fourth index is greater than the third index (i.e., the situation of (d) of FIG. 17), the second parameter may indicate the number of RBs constituting the UL BWP.

In non-SBFD symbols/slots, the first RB may be obtained by the above-described Equation 6 as in the legacy technique.

In contrast, in SBFD symbols/slots, the first RB may be obtained based on the first parameter and the second parameter according to the above-described Equation 7 or Equation 8. According to an embodiment, in SBFD symbols/slots, the first RB may be obtained based on the first parameter and the second parameter according to Equation 9 or Equation 10 described later.

The UE may determine the first parameter using information indicating frequency resources constituting the UL BWP and/or the UL subband.

Alternatively, the first parameter may be indicated to the UE by the network via RRC/DCI signaling. In this case, if the UE does not receive/configure the first parameter from the network, the UE may implicitly determine a value of the first parameter using information indicating frequency resources constituting the UL BWP and/or the UL subband, or may determine the value of the first parameter as a predefined value (e.g., 0).

The UE may determine the value of the first parameter as 0 when transmitting PUSCH in non-SBFD symbols/slots or when not transmitting PUSCH in SBFD symbols/slots.

The UE may determine the second parameter using information indicating frequency resources constituting the UL BWP and/or the UL subband. Alternatively, the second parameter may be indicated to the UE by the network via RRC/DCI signaling.

CG (Configured grant) PUSCH transmission may include Type 1 CG PUSCH and Type 2 CG PUSCH.

For Type 1 CG PUSCH, various parameters (time-frequency resource allocation, periodicity, offset, start symbol, length, etc.) for PUSCH transmission may be configured via higher-layer signaling (RRC). For Type 2 CG PUSCH, only some parameters such as periodicity and number of repetitions may be configured via higher-layer signaling (RRC), and remaining parameters may be configured via an activation DCI.

1) For a CG(configured grant) PUSCH configuration without repetitions, if the transmission occasions are across SBFD symbols or non-SBFD symbols where each transmission occasion has either all SBFD or all non-SBFD symbols (i.e., Configuration 2),

2) for PUSCH repetition type-A across SBFD symbols and non-SBFD symbols in different slots where each repetition has either all SBFD or all non-SBFD symbols (i.e., Configuration 2),

3) for multi-PUSCH scheduled by a single DCI across SBFD symbols and non-SBFD symbols, where each PUSCH within a slot has either all SBFD or all non-SBFD symbols (i.e., Configuration 2)), and/or

4) for TBoMS across SBFD symbols and non-SBFD symbols in different slots, where each transmission within a slot has either all SBFD or all non-SBFD symbols (i.e., Configuration 2),

a single resource configuration/indication for non-SBFD symbols and configuration/indication/determination of RB offset(s) for determining frequency resources for SBFD symbols may be provided. The number of PRBs is the same for PUSCH transmission in SBFD symbols and PUSCH transmission in non-SBFD symbols.

That is, in order to determine frequency resources of PUSCH in SBFD symbols in PUSCH repetition, frequency resources may be indicated based on non-SBFD symbols, and an RB offset may be applied thereto to determine frequency resources in SBFD symbols.

Meanwhile, for Type 1 CG PUSCH using Configuration 2, FH(frequency hopping) offsets for SBFD symbols and non-SBFD symbols may be separately configured.

To configure an FH offset for SBFD symbols, a new RRC parameter may be introduced in 'rrc-ConfiguredUplinkGrant' of 'ConfiguredGrantConfig'.

For a DCI-scheduled PUSCH and Type 2 CG PUSCH, separate configuration of FH offset lists for SBFD symbols and non-SBFD symbols may be supported. To configure a set of FH offsets for SBFD symbols, a new RRC parameter may be introduced in 'PUSCH-Config'.

The UE may apply an FH offset/FH offset list depending on a symbol type of PUSCH transmissions.

If an FH offset/FH offset list for SBFD symbols is not provided, the UE may disable FH for PUSCH transmission in SBFD symbols, or may apply an FH offset/FH offset list for non-SBFD symbols to SBFD symbols.

When performing PUSCH frequency hopping, according to the current standard specification, an FH offset list configured by an RRC parameter is provided to determine frequency resources in a second hop. In the present disclosure, an FH offset list applied to SBFD symbols may be separately configured.

That is, upon applying FH, instead of the legacy Equation 6 for determining a starting PRB, the following equation may be used.

[Equation 9]

$$\text{RB}_{\text{start}}(n) = \begin{cases} (\text{RB}_{\text{start}})\text{mod}N_{BWP,SBFD}^{size} + \text{RB}_{\text{offset,SBFD}} & n \text{ mode } 2 = 0 \\ (\text{RB}_{\text{start}} + \text{RB}_{\text{offset}})\text{mod}N_{BWP,SBFD}^{size} + \text{RB}_{\text{offset,SBFD}} & n \text{ mode } 2 = 1 \end{cases}$$

In Equation 9, when 'n mod 2 = 0', in order to prevent $\text{RB}_{\text{start}}$ indicated based on non-SBFD symbols from going out of a range of PRBs usable for UL in SBFD symbols (i.e., a subset of the UL BWP and the UL subband), modulo operation by $N_{\text{BWP,SBFD}}^{\text{size}}$, which is a size of PRBs usable for UL, is performed and then $\text{RB}_{\text{offset,SBFD}}$ is added.

In Equation 9, when 'n mod 2 = 1', $\text{RB}_{\text{offset}}$ for FH applied in SBFD symbols is added. Thereafter, in order to prevent $\text{RB}_{\text{start}}+\text{RB}_{\text{offset,SBFD}}$ from going out of the range of PRBs usable for UL in SBFD symbols (i.e., a subset of the UL BWP and the UL subband), modulo operation by $N_{\text{BWP,SBFD}}^{\text{size}}$ is performed and then $\text{RB}_{\text{offset,SBFD}}$ is added.

In Equation 9, $\text{RB}_{\text{offset,SBFD}}$ corresponds to an RB offset for determining frequency resources in SBFD symbols, and $\text{RB}_{\text{offset}}$ may correspond to an FH offset value determined from an FH offset list applied upon FH in SBFD symbols.

Alternatively, upon applying FH, instead of the legacy Equation 6 for determining a starting PRB, the following equation may be used.

[Equation 10]

$$\text{RB}_{\text{start}}(n) = \begin{cases} (\text{RB}_{\text{start}} + \text{RB}_{\text{offset,1}})\text{mod}N_{BWP,SBFD}^{size} + \text{RB}_{\text{offset,SBFD}} & n \text{ mode } 2 = 0 \\ (\text{RB}_{\text{start}} + \text{RB}_{\text{offset,1}} + \text{RB}_{\text{offset,2}})\text{mod}N_{BWP,SBFD}^{size} + \text{RB}_{\text{offset,SBFD}} & n \text{ mode } 2 = 1 \end{cases}$$

In Equation 10, since $\text{RB}_{\text{start}}$ in SBFD symbols is determined by applying an RB offset relative to non-SBFD symbols, the legacy $\text{RB}_{\text{start}}$ is replaced with $\text{RB}_{\text{start}}+\text{RB}_{\text{offset,1}}$ for both 'n mod 2 = 0' and 'n mod 2 = 1'.

In Equation 10, when 'n mod 2 = 0', in order to prevent $\text{RB}_{\text{start}}+\text{RB}_{\text{offset,1}}$ from going out of a range of PRBs usable for UL in SBFD symbols (i.e., a subset of the UL BWP and the UL subband), modulo operation by $N_{\text{BWP,SBFD}}^{\text{size}}$ is performed and then $\text{RB}_{\text{offset,SBFD}}$ is added.

In Equation 10, when 'n mod 2 = 1', $\text{RB}_{\text{offset,2}}$ applied for FH in SBFD symbols is added. Thereafter, in order to prevent $\text{RB}_{\text{start}}+\text{RB}_{\text{offset,1}}+\text{RB}_{\text{offset,2}}$ from going out of the range of PRBs usable for UL in SBFD symbols (i.e., a subset of the UL BWP and the UL subband), modulo operation by $N_{\text{BWP,SBFD}}^{\text{size}}$ is performed and then $\text{RB}_{\text{offset,SBFD}}$ is added.

In Equation 10, $\text{RB}_{\text{offset,1}}$ and $\text{RB}_{\text{offset,SBFD}}$ correspond to RB offsets for determining frequency resources in SBFD symbols, and $\text{RB}_{\text{offset,2}}$ may correspond to an FH offset value determined from an FH offset list applied upon FH in SBFD symbols.

Alternatively, upon applying FH, instead of the legacy Equation 6 for determining a starting PRB, any one of the following equations may be used.

[Equation 11]

$$\text{RB}_{\text{start}}(n) = \begin{cases} (\text{RB}_{\text{start}} + \text{RB}_{\text{offset,1}})\text{mod}N_{BWP,SBFD}^{size} + \text{RB}_{\text{offset,SBFD}} & n \text{ mode } 2 = 0 \\ (\text{RB}_{\text{start}} + \text{RB}_{\text{offset,2}})\text{mod}N_{BWP,SBFD}^{size} + \text{RB}_{\text{offset,SBFD}} & n \text{ mode } 2 = 1 \end{cases}$$

In Equation 11, when 'n mod 2 = 0', since $\text{RB}_{\text{start}}$ in an SBFD symbol is determined by applying an RB offset relative to a non-SBFD symbol, the legacy $\text{RB}_{\text{start}}$ may be replaced with $\text{RB}_{\text{start}}+\text{RB}_{\text{offset,1}}$. Thereafter, in order to prevent $\text{RB}_{\text{start}}+\text{RB}_{\text{offset,1}}$ from going out of a range of PRBs usable for UL in an SBFD symbol (i.e., a subset of the UL BWP and the UL subband), modulo operation is performed by $N_{\text{BWP,SBFD}}^{\text{size}}$, which is a size of PRBs usable for UL, and then

$RB_{offset,SBFD}$ is added.

In Equation 11, when 'n mod 2 = 1', $RB_{offset,2}$ applied for FH in an SBFD symbol is added. Thereafter, in order to prevent $RB_{start}+RB_{offset,2}$ from going out of the range of PRBs usable for UL in an SBFD symbol (i.e., a subset of the UL BWP and the UL subband), modulo operation is performed by $N_{BWP,SBFD}^{size}$, which is a size of PRBs usable for UL, and then $RB_{offset,SBFD}$ is added.

In Equation 11, $RB_{offset,1}$ and $RB_{offset,SBFD}$ may correspond to RB offsets for determining frequency resources in an SBFD symbol, and $RB_{offset,2}$ may correspond to an FH offset value determined from an FH offset list applied upon FH in an SBFD symbol.

Alternatively, upon applying FH, instead of the legacy Equation 6 for determining a starting PRB, the following equation may be used.

[Equation 12]

$$RB_{start}(n) = \begin{cases} RB_{start} + RB_{offset,1} & n \bmod 2 = 0 \\ (RB_{start} + RB_{offset,1} + RB_{offset,2}) \bmod N_{BWP,SBFD}^{size} + RB_{offset,SBFD} & n \bmod 2 = 1 \end{cases}$$

In Equation 12, since $RB_{start}$ in an SBFD symbol is determined by applying an RB offset relative to a non-SBFD symbol, the legacy $RB_{start}$ is replaced with $RB_{start}+RB_{offset,1}$ in both cases of 'n mod 2 = 0' and 'n mod 2 = 1'.

In Equation 12, when 'n mod 2 = 0', it may be assumed that $RB_{start}+RB_{offset,1}$ is indicated by a base station to be located in the UL subband.

In Equation 12, when 'n mod 2 = 1', $RB_{offset,2}$ applied for FH in an SBFD symbol is added. Thereafter, in order to prevent $RB_{start}+RB_{offset,1}+RB_{offset,2}$ from going out of a range of PRBs usable for UL in an SBFD symbol (i.e., a subset of the UL BWP and the UL subband), modulo operation is performed by $N_{BWP,SBFD}^{size}$, which is a size of PRBs usable for UL, and then $RB_{offset,SBFD}$ is added.

In Equation 12, $RB_{offset,1}$ and $RB_{offset,SBFD}$ may correspond to RB offsets for determining frequency resources in an SBFD symbol, and $RB_{offset,2}$ may correspond to an FH offset value determined from an FH offset list applied upon FH in an SBFD symbol.

Alternatively, upon applying FH, instead of the legacy Equation 6 for determining a starting PRB, the following equation may be used.

[Equation 13]

$$RB_{start}(n) = \begin{cases} RB_{start} + RB_{offset,1} & n \bmod 2 = 0 \\ (RB_{start} + RB_{offset}) \bmod N_{BWP,SBFD}^{size} + RB_{offset,SBFD} & n \bmod 2 = 1 \end{cases}$$

In Equation 13, when 'n mod 2 = 0', since $RB_{start}$ in an SBFD symbol is determined by applying an RB offset relative to a non-SBFD symbol, the legacy $RB_{start}$ is replaced with $RB_{start}+RB_{offset,1}$. $RB_{start}+RB_{offset,1}$ may be assumed to be indicated by a base station to be located in the UL subband.

In Equation 13, when 'n mod 2 = 1', $RB_{offset}$ applied for FH in an SBFD symbol is added. Thereafter, in order to prevent $RB_{start}+RB_{offset,SBFD}$ from going out of a range of PRBs usable for UL in an SBFD symbol (i.e., a subset of the UL BWP and the UL subband), modulo operation is performed by NBWP,SBFDsize, which is a size of PRBs usable for UL, and then RBoffset,SBFD is added.

In Equation 13, $RB_{offset,1}$ and $RB_{offset}$, SBFD may correspond to RB offsets for determining frequency resources in an SBFD symbol, and RBoffset may correspond to an FH offset value determined from an FH offset list applied upon FH in an SBFD symbol.

According to the method of FIG. 18, the first RB is always included in the uplink subband. Accordingly, even when UL-transmissible resources differ between an SBFD slot and a non-SBFD slot, PUSCH transmission according to frequency hopping can be performed within UL-transmissible resources in each slot. As a result, PUSCH transmission efficiency increases and system throughput can be increased.

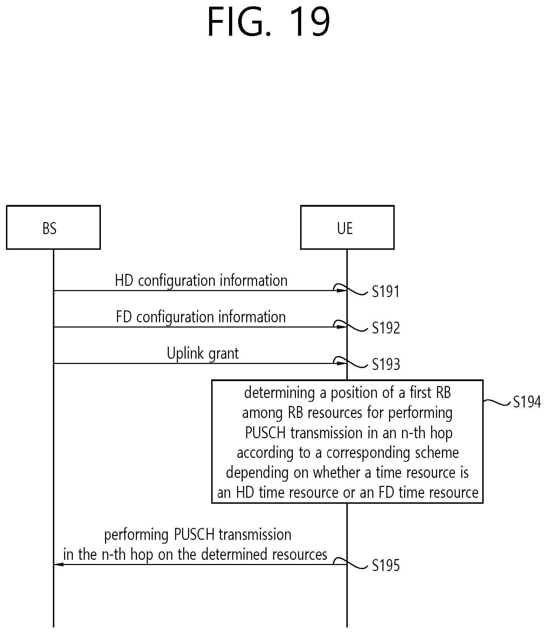

FIG. 19 illustrates a signaling procedure between a base station and a UE.

Referring to FIG. 19, the base station provides the UE with HD configuration information (S191).

The HD configuration information may include, for example, frequency resource information for a UL BWP and a UL subband.

The base station provides the UE with FD configuration information (S192). The FD configuration information may indicate FD time resources (e.g., an SBFD slot and an SBFD symbol).

The base station provides the UE with an uplink grant (S193). The uplink grant may be a DCI format that schedules PUSCH transmission of the UE. The uplink grant may indicate whether frequency hopping of the PUSCH is applied.

The UE determines a position of a first RB among RB resources for performing PUSCH transmission in an n-th hop according to a corresponding scheme depending on whether a specific time resource is an HD time resource or an FD time resource (S194).

That is, if the specific time resource is an HD time resource (e.g., a non-SBFD symbol/slot), the first RB is obtained according to Equation 6, and if the specific time resource is an FD time resource (e.g., an SBFD symbol/slot), the first RB may be obtained according to Equation 7 or Equation 8 described above (or according to Equation 9 or Equation 10) based on the first parameter and the second parameter.

The UE performs PUSCH transmission in the n-th hop on the determined resources (S195).

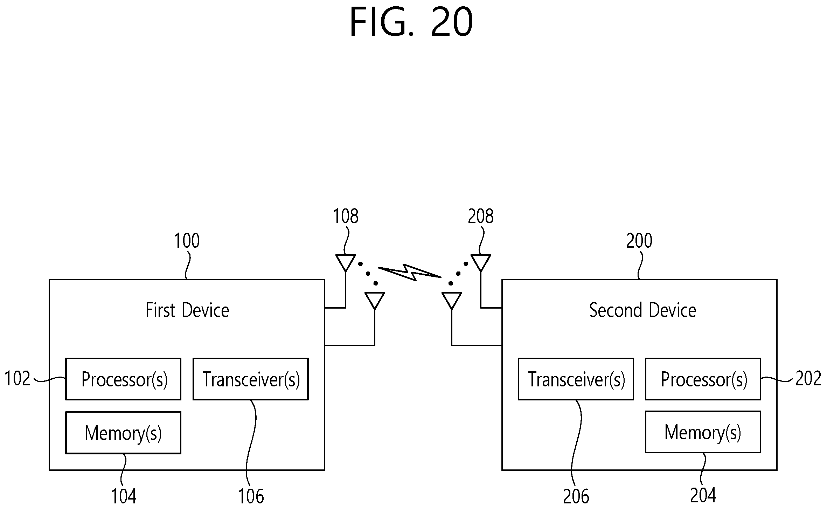

FIG. 20 illustrates a wireless device applicable to the present specification.

Referring to FIG. 20, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip. The processor 102 determines, in a specific time resource, a first resource block (resource block: RB) for a transmission of an uplink channel with frequency hopping applied, and transmits the uplink channel from the first RB through contiguous resource blocks in a frequency domain. In this case, the processor (102) determines the first RB differently depending on whether the specific time resource is an HD (half duplex) resource or an SBFD (subband full duplex) resource, and, when the specific time resource is the SBFD resource, the first RB is determined based on i) a first parameter indicating a lowest resource block among resource blocks overlapped between first frequency resources constituting an uplink BWP (bandwidth part) and second frequency resources constituting an uplink subband, and ii) a second parameter indicating a size of the overlapped resource blocks.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip. The processor 202 receives, in a specific time resource, an uplink channel with frequency hopping applied, wherein the uplink channel is received from a first resource block (resource block: RB) through contiguous resource blocks in a frequency domain. The first RB is determined differently depending on whether the specific time resource is an HD (half duplex) resource or an SBFD (subband full duplex) resource, and, when the specific time resource is the SBFD resource, the first RB is determined based on i) a first parameter indicating a lowest resource block among resource blocks overlapped between first frequency resources constituting an uplink BWP (bandwidth part) and second frequency resources constituting an uplink subband, and ii) a second parameter indicating a size of the overlapped resource blocks.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer-readable medium (CRM) including instructions based on being executed by at least one processor performs the steps of determining, in a specific time resource, a first resource block (RB) for a transmission of an uplink channel with frequency hopping applied; and transmitting the uplink channel from the first RB through contiguous resource blocks in a frequency domain. In this case, the first RB is determined differently depending on whether the specific time resource is an HD resource or an SBFD resource, and, when the specific time resource is the SBFD resource, the first RB is determined based on i) a first parameter indicating a lowest resource block among resource blocks overlapped between first frequency resources constituting an uplink BWP and second frequency resources constituting an uplink subband, and ii) a second parameter indicating a size of the overlapped resource blocks.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

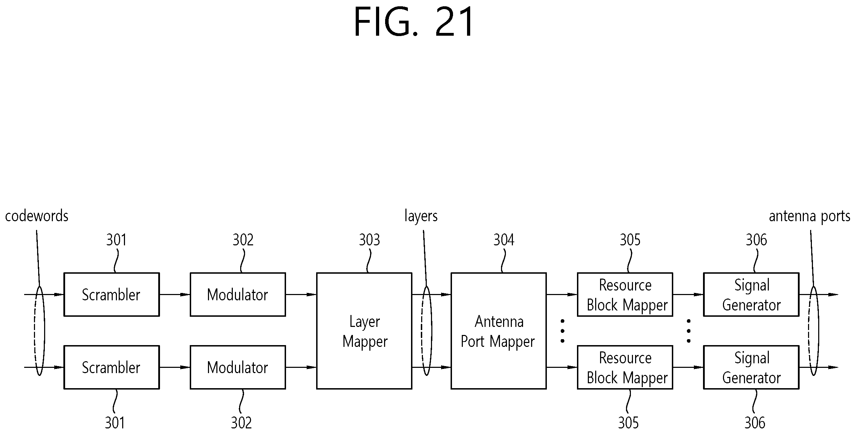

FIG. 21 shows an example of a structure of a signal processing module. Herein, signal processing may be performed in the processors 102 and 202 of FIG. 20.

Referring to FIG. 21, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

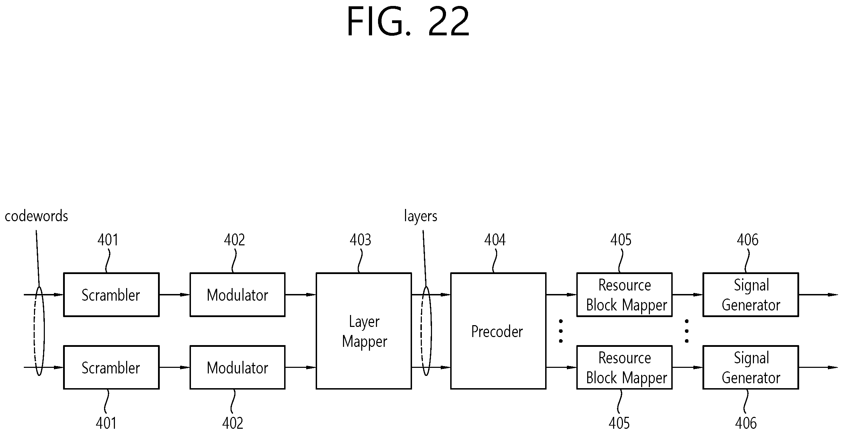

FIG. 22 shows another example of a structure of a signal processing module in a transmitting device. Herein, signal processing may be performed in a processor of a UE/BS, such as the processors 102 and 202 of FIG. 20.

Referring to FIG. 22, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

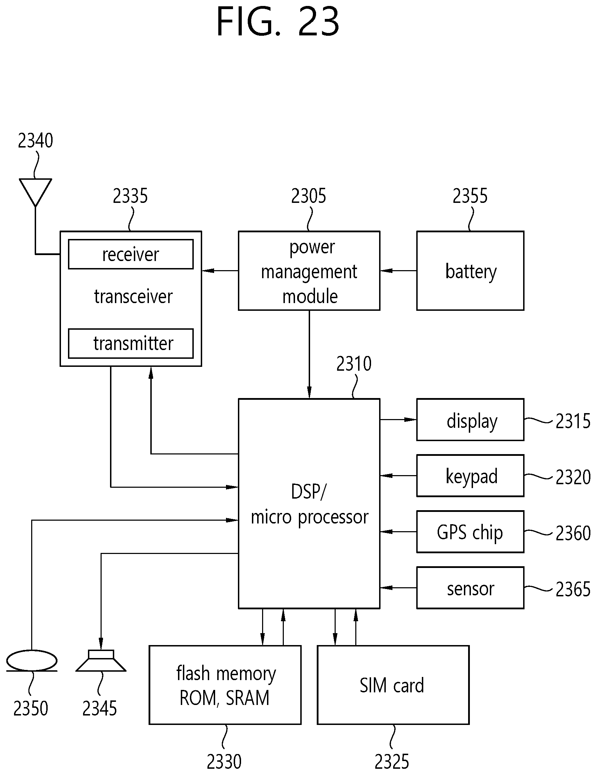

FIG. 23 illustrates an example of a wireless communication device according to an implementation example of the present disclosure.

Referring to FIG. 23, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 23 may be the processors 102 and 202 in FIG. 20.

The memory 2330 is connected to the processor 2310 and stores information related to operations of the processor. The memory may be located inside or outside the processor and connected to the processor through various techniques such as wired connection and wireless connection. The memory 2330 in FIG. 23 may be the memories 104 and 204 in FIG. 20.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

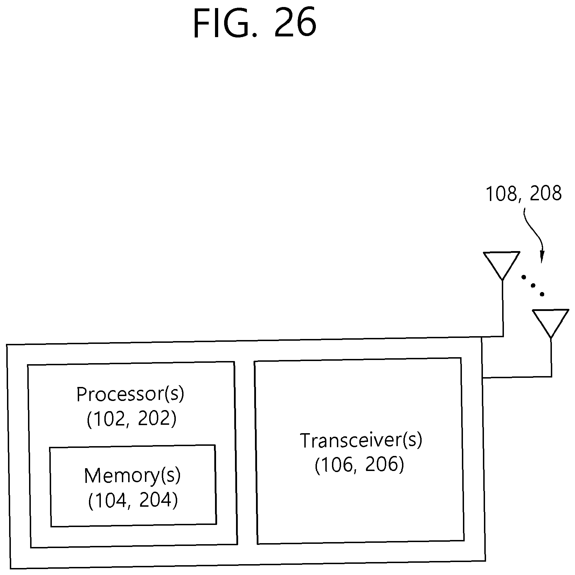

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 23 may be the transceivers 106 and 206 in FIG. 26.

Although not shown in FIG. 23, various components such as a camera and a universal serial bus (USB) port may be additionally included in the UE. For example, the camera may be connected to the processor 2310.

FIG. 23 is an example of implementation with respect to the UE and implementation examples of the present disclosure are not limited thereto. The UE need not essentially include all the components shown in FIG. 23. That is, some of the components, for example, the keypad 2320, the GPS chip 2360, the sensor 2365 and the SIM card 2325 may not be essential components. In this case, they may not be included in the UE.

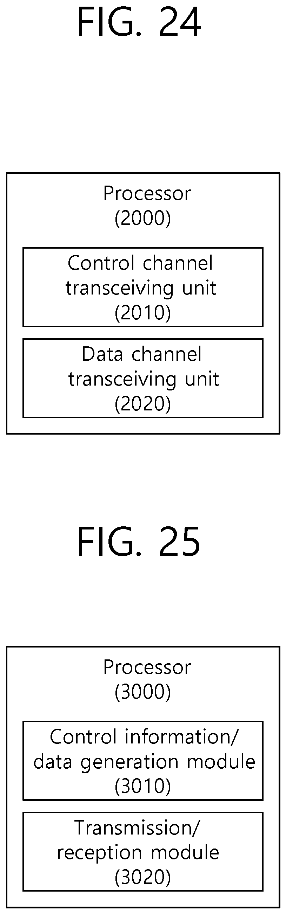

FIG. 24 shows an example of the processor 2000.

Referring to FIG. 24, The processor 2000 may include a control channel transceiver 2010 and a data channel transceiver 2020. For example, the processor 2000 may execute the methods described in FIGS. 17 to 19 from the UE perspective. The processor 2000 may be an example of the processors 102 and 202 of FIG. 20.

FIG. 25 shows an example of the processor 3000.

Referring to FIG. 25, The processor 3000 may include a control information/data generation module 3010 and a transmit/receive module 3020. The processor 3000 may execute the methods described in FIGS 19 to 22, for example, from the perspective of a base station or network. The processor 3000 may be an example of the processors 102, 202 of FIG. 20.

FIG. 26 shows another example of a wireless device.

Referring to FIG. 26, the wireless device may include one or more processors 102 and 202, one or more memories 104 and 204, one or more transceivers 106 and 206 and one or more antennas 108 and 208.

The example of the wireless device described in FIG. 26 is different from the example of the wireless described in FIG. 20 in that the processors 102 and 202 and the memories 104 and 204 are separated in FIG. 20 whereas the memories 104 and 204 are included in the processors 102 and 202 in the example of FIG. 26. That is, the processor and the memory may constitute one chipset.

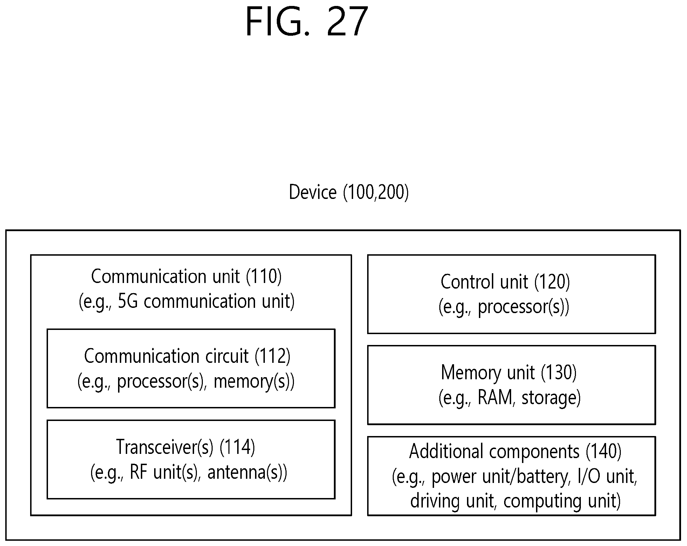

FIG. 27 shows another example of a wireless device applied to the present specification. The wireless device may be implemented in various forms according to a use-case/service.

Referring to FIG. 27, wireless devices 100 and 200 may correspond to the wireless devices 100 and 200 of FIG. 20 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 20. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 27, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

A hand-held device to which this specification applies is exemplified. The hand-held device may include a smartphone, a smartpad, a wearable device (e.g., a smartwatch or a smartglasses), or a portable computer (e.g., a notebook).

The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

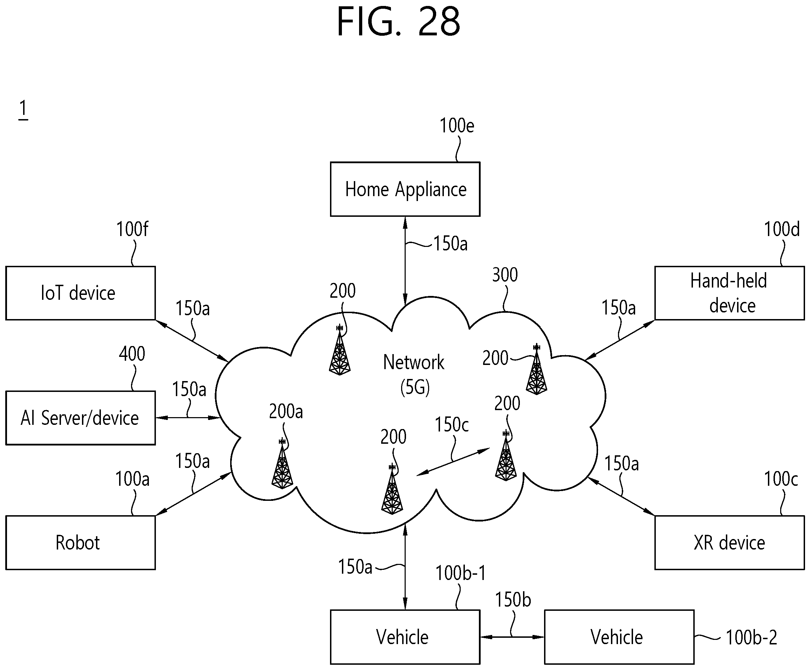

FIG. 28 illustrates a communication system 1 applied to the present specification.

Referring to FIG. 28, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 5. For convenience of explanation, among the frequency ranges that are used in an NR system, FR1 may mean a "sub 6GHz range", and FR2 may mean an "above 6GHz range" and may also be referred to as a millimeter wave (mmW).

[Table 5]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 6 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 6]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method, comprising:

   determining, by a user equipment (UE), in a specific time resource, a first resource block (RB) for transmission of an uplink channel with frequency hopping applied; and
   transmitting, by the UE, the uplink channel from the first RB through contiguous resource blocks in a frequency domain,
   wherein the first RB is determined differently depending on whether the specific time resource is an HD (half duplex) resource or an SBFD (subband full duplex) resource, and
   wherein, based on the specific time resource being the SBFD resource, the first RB is determined based on i) a first parameter specifying a lowest resource block among overlapped resource blocks between first frequency resources constituting an uplink BWP (bandwidth part) and second frequency resources constituting an uplink subband, and ii) a second parameter specifying a size of the overlapped resource blocks.

2. The method of claim 1, wherein the first RB is always included in the uplink subband.

3. The method of claim 1, wherein the SBFD resource is an SBFD symbol.

4. The method of claim 1, wherein a value of the first parameter varies depending on positions of the first frequency resource and the second frequency resource.

5. The method of claim 1, wherein, based on a second index of a lowest resource block of the uplink subband being greater than a first index of a lowest resource block of the uplink BWP, the first parameter specifies an offset between the second index and the first index.

6. The method of claim 1, wherein, based on a second index of a lowest resource block of the uplink subband being less than or equal to a first index of a lowest resource block of the uplink BWP, the first parameter specifies a value of 0.

7. The method of claim 1, wherein, based on a second index of a lowest resource block of the uplink subband being greater than a first index of a lowest resource block of the uplink BWP, and a fourth index of a highest resource block of the uplink subband being greater than a third index of a highest resource block of the uplink BWP, the second parameter specifies a number of resource blocks from the second index to the third index.

8. The method of claim 1, wherein, based on a second index of a lowest resource block of the uplink subband being greater than a first index of a lowest resource block of the uplink BWP, and a fourth index of a highest resource block of the uplink subband being less than or equal to a third index of a highest resource block of the uplink BWP, the second parameter specifies a number of resource blocks constituting the uplink subband.

9. The method of claim 1, wherein, based on a second index of a lowest resource block of the uplink subband being less than or equal to a first index of a lowest resource block of the uplink BWP, and a fourth index of a highest resource block of the uplink subband being greater than a third index of a highest resource block of the uplink BWP, the second parameter specifies a number of resource blocks constituting the uplink BWP.

10. The method of claim 1, wherein, based on a second index of a lowest resource block of the uplink subband being less than or equal to a first index of a lowest resource block of the uplink BWP, and a fourth index of a highest resource block of the uplink subband being less than or equal to a third index of a highest resource block of the uplink BWP, the second parameter specifies a number of resource blocks from the first index to the fourth index.

11. A user equipment (UE), comprising:

at least one transceiver;

at least one memory; and

at least one processor operably connectable to the at least one transceiver and the at least one memory, wherein the at least one memory stores instructions that, based on being executed by the at least one processor, cause the at least one processor to perform operations comprising:

determining, in a specific time resource, a first resource block (RB) for transmission of an uplink channel with frequency hopping applied; and

transmitting the uplink channel from the first RB through contiguous resource blocks in a frequency domain, wherein the first RB is determined differently depending on whether the specific time resource is an HD (half duplex) resource or an SBFD (subband full duplex) resource, and

wherein, based on the specific time resource being the SBFD resource, the first RB is determined based on i) a first parameter specifying a lowest resource block among overlapped resource blocks between first frequency resources constituting an uplink BWP (bandwidth part) and second frequency resources constituting an uplink subband, and ii) a second parameter specifying a size of the overlapped resource blocks.

12. The UE of claim 11, wherein the first RB is always included in the uplink subband.

13. The UE of claim 11, wherein the SBFD resource is an SBFD symbol.

14. The UE of claim 11, wherein a value of the first parameter varies depending on positions of the first frequency resource and the second frequency resource.

15. The UE of claim 11, wherein, based on a second index of a lowest resource block of the uplink subband being greater than a first index of a lowest resource block of the uplink BWP, the first parameter specifies an offset between the second index and the first index.

16. The UE of claim 11, wherein, based on a second index of a lowest resource block of the uplink subband being less than or equal to a first index of a lowest resource block of the uplink BWP, the first parameter specifies a value of 0.

17. The UE of claim 11, wherein, based on a second index of a lowest resource block of the uplink subband being greater than a first index of a lowest resource block of the uplink BWP, and a fourth index of a highest resource block of the uplink subband being greater than a third index of a highest resource block of the uplink BWP, the second parameter specifies a number of resource blocks from the second index to the third index.

18. The UE of claim 11, wherein, based on a second index of a lowest resource block of the uplink subband being greater than a first index of a lowest resource block of the uplink BWP, and a fourth index of a highest resource block of the uplink subband being less than or equal to a third index of a highest resource block of the uplink BWP, the second parameter specifies a number of resource blocks constituting the uplink subband.

19. The UE of claim 11, wherein, based on a second index of a lowest resource block of the uplink subband being less than or equal to a first index of a lowest resource block of the uplink BWP, and a fourth index of a highest resource block of the uplink subband being greater than a third index of a highest resource block of the uplink BWP, the second parameter specifies a number of resource blocks constituting the uplink BWP.

20. The UE of claim 11, wherein, based on a second index of a lowest resource block of the uplink subband being less than or equal to a first index of a lowest resource block of the uplink BWP, and a fourth index of a highest resource block of the uplink subband being less than or equal to a third index of a highest resource block of the uplink BWP, the second parameter specifies a number of resource blocks from the first index to the fourth index.

21. A apparatus, comprising:

at least one memory; and

at least one processor operably connectable to the at least one memory,

wherein the at least one memory stores instructions that, based on being executed by the at least one processor, cause the at least one processor to perform operations comprising:

determining, in a specific time resource, a first resource block (RB) for transmission of an uplink channel with frequency hopping applied; and

transmitting the uplink channel from the first RB through contiguous resource blocks in a frequency domain, wherein the first RB is determined differently depending on whether the specific time resource is an HD (half duplex) resource or an SBFD (subband full duplex) resource, and

wherein, based on the specific time resource being the SBFD resource, the first RB is determined based on i) a first parameter specifying a lowest resource block among overlapped resource blocks between first frequency resources constituting an uplink BWP (bandwidth part) and second frequency resources constituting an uplink subband, and ii) a second parameter specifying a size of the overlapped resource blocks.

22. A computer readable medium (CRM) comprising at least one instruction that, based on being executed by at least one processor, directs a device to:

determining, in a specific time resource, a first resource block (RB) for transmission of an uplink channel with frequency hopping applied; and

transmitting the uplink channel from the first RB through contiguous resource blocks in a frequency domain, wherein the first RB is determined differently depending on whether the specific time resource is an HD (half duplex) resource or an SBFD (subband full duplex) resource, and

wherein, based on the specific time resource being the SBFD resource, the first RB is determined based on i) a first parameter specifying a lowest resource block among overlapped resource blocks between first frequency resources constituting an uplink BWP (bandwidth part) and second frequency resources constituting an uplink subband, and ii) a second parameter specifying a size of the overlapped resource blocks.

23. A method, comprising:

receiving, by a base station in a specific time resource, an uplink channel to which frequency hopping is applied, wherein the uplink channel is received through contiguous resource blocks in a frequency domain starting from a first resource block (RB),

wherein the first RB is determined differently depending on whether the specific time resource is an HD (half duplex) resource or an SBFD (subband full duplex) resource, and

wherein, based on the specific time resource being the SBFD resource, the first RB is determined based on i) a first parameter specifying a lowest resource block among resource blocks overlapped between first frequency resources constituting an uplink BWP (bandwidth part) and second frequency resources constituting an uplink subband (subband), and ii) a second parameter specifying a size of the overlapped resource blocks.

24. A base station, comprising:

at least one transceiver;
at least one memory; and
at least one processor operably connectable to the at least one transceiver and the at least one memory,
wherein the at least one memory stores instructions that, based on being executed by the at least one processor, cause the at least one processor to perform operations comprising:

receiving, in a specific time resource, an uplink channel to which frequency hopping is applied, wherein the uplink channel is received through contiguous resource blocks in a frequency domain starting from a first resource block (RB),

wherein the first RB is determined differently depending on whether the specific time resource is an HD (half duplex) resource or an SBFD (subband full duplex) resource, and

wherein, based on the specific time resource being the SBFD resource, the first RB is determined based on i) a first parameter specifying a lowest resource block among resource blocks overlapped between first frequency resources constituting an uplink BWP (bandwidth part) and second frequency resources constituting an uplink subband (subband), and ii) a second parameter specifying a size of the overlapped resource blocks.

# FIG. 1

# FIG. 2

# FIG. 3

# FIG. 4

AMF/UPF        AMF/UPF

5GC

NG    NG       NG    NG

Xn

gNB        gNB

NG-RAN

Xn        Xn

gNB

# FIG. 5

**gNB**

| RRM between cells |
| RB control |
| Connection mobility control |
| Wireless access control |
| Measurement setting and provision |
| Dynamic resource allocation (scheduler) |

NG-RAN

**AMF**

| NAS security |
| Idle state mobility processing |

**SMF**

| UE IP address allocation |
| PDU session control |

**UPF**

| Mobility anchoring |
| PDU processing |

Internet

5GC

EP 4 779 918 A1

# FIG. 6

| ... | One Frame (10ms) | ... |

| ... | Half-Frame (5ms) | Half-Frame (5ms) | ... |

| ... | Subframe 0 (1ms) | ... | Subframe 4 (1ms) | Subframe 5 (1ms) | ... | Subframe 9 (1ms) | ... |

Subframe (1ms)

**15KHz**

| Slot 0 (14symbols) |

1ms

**30KHz**

| Slot 0 (14symbols) | Slot 1 |

500us

**60KHz**

| Slot 0 (14symbols) | Slot 1 | Slot 2 | Slot 3 |

250us

**120KHz**

| Slot 0 (14symbols) | Slot 1 | Slot 2 | Slot 3 | Slot 4 | Slot 5 | Slot 6 | Slot 7 |

125us

# FIG. 7

Resource grid

A carrier { A BWP { 1RB=12 subcarriers

1 RE

1subcarrier

1 symbol

l=0 • • •

k=0

EP 4 779 918 A1

# FIG. 8

CCE #2    CCE #n

$N^{CORESET}{}_{RB}$ resource blocks

CCE #1

1, 2 or 3 OFDM symbols

# FIG. 9

Downlink only, or Uplink only

Frequency

RB index

| Symbol index: 0 1 2 3 4 5 6 7 8 9 10 11 12 13 |

One TTI

▨ DL Control channel        ▦ UL Control channel

EP 4 779 918 A1

# FIG. 10

DL only

UL only

UL control

DL control

Mixed UL-DL

Slot

: DL     : UL

# FIG. 11

Initial cell search | system information reception | random access procedure | general DL/UL Tx/Rx

| P/S-SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH |

S11    S12    S13    S14    S15    S16    S17    S18

- DL/UL ACK/NACK
- UE CQI/PMI/Rank report using PUSCH and/or PUCCH

# FIG. 12

(a)

DL    UL

Frequency

Carrier #0
Subband-wise Full Duplex

(b)

DL    UL

Frequency

Carrier #0
Spectrum-Sharing Full Duplex

# FIG. 13

(a)

(b)

# FIG. 14

A: First time resource
B: Second time resource

(a)

(b)

# FIG. 15

A: First time resource
B: Second time resource

(a)

(b)

# FIG. 16

PRB N3

PRB 1

PRB 0

$N^{size}_{BWP, 2}$

PRB N2

PRB 1

PRB 0

$N^{size}_{BWP, 1}$

PRB N1

PRB 1

PRB 0

$N^{size}_{BWP, 0}$

Carrier Bandwidth

$N^{start}_{BWP, 2}$

$N^{start}_{BWP, 1}$

$N^{start}_{BWP, 0}$

CRB 0

Freq.

Time

PRB 0 of the reference resource block (Point A)

# FIG. 17

(a)

(b)

(c)

(d)

Frequency

# FIG. 18

Determining, in a specific time resource,
a first resource block (RB) for transmission of
an uplink channel to which frequency hopping is applied,
wherein the first RB is determined differently
depending on whether the specific time resource is
an HD (half duplex) resource or
an SBFD (subband full duplex) resource, and,
when the specific time resource is the SBFD resource,
the first RB is determined based on i) a first parameter
indicating a lowest resource block among overlapped
resource blocks between first frequency resources
constituting an uplink BWP(bandwidth part)
and second frequency resources constituting
an uplink subband, and ii) a second parameter indicating
a size of the overlapped resource blocks

S181

Transmitting the uplink channel through contiguous
resource blocks in a frequency domain starting
from the first RB

S182

# FIG. 19

```
   BS                              UE
    │                              │
    │  HD configuration information │
    │──────────────────────────────▷ S191
    │                              │
    │  FD configuration information │
    │──────────────────────────────▷ S192
    │                              │
    │       Uplink grant            │
    │──────────────────────────────▷ S193
    │                              │
    │        ┌──────────────────────────────────┐
    │        │ determining a position of a first RB │ S194
    │        │ among RB resources for performing   │
    │        │ PUSCH transmission in an n-th hop   │
    │        │ according to a corresponding scheme │
    │        │ depending on whether a time resource is │
    │        │ an HD time resource or an FD time resource │
    │        └──────────────────────────────────┘
    │                              │
    │    performing PUSCH transmission │
    │◁─ in the n-th hop on the determined resources S195
    │                              │
```

FIG. 20

# FIG. 21

codewords

layers

antenna ports

301 — Scrambler

302 — Modulator

303 — Layer Mapper

304 — Antenna Port Mapper

305 — Resource Block Mapper

306 — Signal Generator

301 — Scrambler

302 — Modulator

305 — Resource Block Mapper

306 — Signal Generator

# FIG. 22

codewords

401      402      403     layers      404      405      406

| Scrambler | Modulator | | | | Resource Block Mapper | Signal Generator |

Layer Mapper     Precoder

| Scrambler | Modulator | | | | Resource Block Mapper | Signal Generator |

401      402                          405      406

# FIG. 23

# FIG. 24

Processor
(2000)

Control channel
transceiving unit
(2010)

Data channel
transceiving unit
(2020)

# FIG. 25

Processor
(3000)

Control information/
data generation module
(3010)

Transmission/
reception module
(3020)

# FIG. 26

108, 208

Processor(s)
(102, 202)

Memory(s)
(104, 204)

Transceiver(s)
(106, 206)

# FIG. 27

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 28

**EP 4 779 918 A1**

## INTERNATIONAL SEARCH REPORT

| | International application No. |
|---|---|
| | **PCT/KR2024/013988** |

| A. | CLASSIFICATION OF SUBJECT MATTER |
|---|---|

**H04L 5/00**(2006.01)i

According to International Patent Classification (IPC) or to both national classification and IPC

| B. | FIELDS SEARCHED |
|---|---|

Minimum documentation searched (classification system followed by classification symbols)

H04L 5/00(2006.01); H04L 25/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: HD(half duplex), SBFD(subband full duplex), 오버랩(overlap), 주파수(frequency), BWP(bandwidth part), 주파수 홉핑(frequency hopping), lowest RB(resource block), 크기(size)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | WILUS INC. Discussion on subband non-overlapping full duplex. R1-2308115, 3GPP TSG RAN WG1 #114. Toulouse, France. 11 August 2023.<br>See pages 18-19; and figure 10. | 1-4,11-14,21-24<br>5-10,15-20 |
| Y | XIAOMI. Discussion on subband non-overlapping full duplex. R1-2209284, 3GPP TSG RAN WG1 #110bis-e, e-Meeting. 30 September 2022.<br>See page 3. | 1-4,11-14,21-24 |
| A | LG ELECTRONICS. Study on Subband non-overlapping full duplex. R1-2306886, 3GPP TSG RAN WG1 #114. Toulouse, France. 11 August 2023.<br>See section 2. | 1-24 |
| A | NEC. Discussion on subband non-overlapping full duplex. R1-2306942, 3GPP TSG RAN WG1 #114. Toulouse, France. 11 August 2023.<br>See sections 2.1 and 2.4.7. | 1-24 |
| A | US 2022-0052882 A1 (QUALCOMM INCORPORATED) 17 February 2022 (2022-02-17)<br>See claims 1-12. | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 December 2024** | **23 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2024/013988** |

| Patent document cited in search report | Publication date (day/month/year) | Patent family member(s) | Publication date (day/month/year) |
| --- | --- | --- | --- |
| US 2022-0052882 A1 | 17 February 2022 | US 11652671 B2 | 16 May 2023 |

Form PCT/ISA/210 (patent family annex) (July 2022)